(19) Europäisches Patentamt
European Patent Office
Office européen des brevets

(11) EP 4 723 666 A1

(12) **EUROPEAN PATENT APPLICATION**
published in accordance with Art. 153(4) EPC

(43) Date of publication:
**08.04.2026 Bulletin 2026/15**

(21) Application number: **24825183.7**

(22) Date of filing: **13.06.2024**

(51) International Patent Classification (IPC):
***H04Q 11/00*** *(2006.01)*

(86) International application number:
**PCT/CN2024/098984**

(87) International publication number:
**WO 2024/260287 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.06.2023 CN 202310729548**

(71) Applicants:
- **CHINA MOBILE COMMUNICATION CO., LTD RESEARCH INSTITUTE**
  **Beijing 100053 (CN)**
- **CHINA MOBILE COMMUNICATIONS GROUP CO., LTD.**
  **Beijing 100032 (CN)**

(72) Inventors:
- **ZHANG, Dechao**
  **Beijing 100053 (CN)**
- **LIU, Sheng**
  **Beijing 100053 (CN)**
- **LI, Han**
  **Beijing 100053 (CN)**
- **LI, Yunbo**
  **Beijing 100053 (CN)**
- **WANG, Dong**
  **Beijing 100053 (CN)**
- **HAN, Liuyan**
  **Beijing 100053 (CN)**
- **CAO, Shan**
  **Beijing 100053 (CN)**

(74) Representative: **Murgitroyd & Company**
**165-169 Scotland Street**
**Glasgow G5 8PL (GB)**

# (54) TRANSMISSION METHOD AND APPARATUS, AND OPTICAL COMMUNICATION DEVICE AND STORAGE MEDIUM

(57) Provided are a transmission method and apparatus, an optical communication device, and a storage medium. The method includes: mapping, by the first device, service data into a first frame; the first frame includes a first overhead area, wherein the first overhead area is used to fill with or place difference accumulation information, and the first overhead area includes multiple portions for placing or filling the identical difference accumulation information.

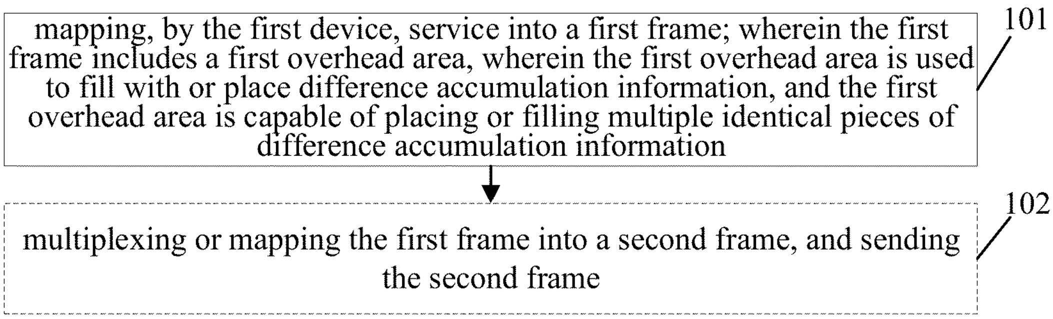


**FIG. 1**

EP 4 723 666 A1

# Description

## CROSS-REFERENCE TO RELATED APPLICATION

The present disclosure is based on, and claims priority to the Chinese patent application No. 202310729548.9, filed on June 19, 2023, a disclosure of which is incorporated herein by reference in its entirety.

## TECHNICAL FIELD

The present disclosure relates to the field of optical communication technology, and in particular, to a transmission method and apparatus, an optical communication device, and a storage medium.

## BACKGROUND

During a transmission of service data through an Optical Transport Network (OTN), each intermediate node needs to recover the clock or frequency of the service data. Currently, a low-pass phase-locked loop is required to recover the frequency of the service data, which consumes significant hardware resources.

## SUMMARY

Embodiments of the present disclosure provide a transmission method, a transmission apparatus, an optical communication device, and a storage medium.

The technical solutions of the embodiments of the present disclosure are implemented as follows.

In a first aspect, an embodiment of the present disclosure provides a transmission method applied to a first device. The method includes: mapping, by the first device, service data into a first frame; the first frame includes a first overhead area, wherein the first overhead area is used to fill with or place difference accumulation information, and the first overhead area is capable of placing or filling multiple identical pieces of difference accumulation information.

In some optional embodiments of the present disclosure, each piece of difference accumulation information occupies one byte in the first overhead area.

In some optional embodiments of the present disclosure, the multiple identical pieces of difference accumulation information may be placed or filled in different rows of the first overhead area.

In some optional embodiments of the present disclosure, each row of the first overhead area is used to fill with or place a first portion of the difference accumulation information, and the first portion of the difference accumulation information is used to fill with or place difference accumulation information of a current moment; and/or

each row of the first overhead area is used to fill with or place another portion of the difference accumulation information other than the first portion, and the other portion of the difference accumulation information is used to fill with or place difference accumulation information of a past moment.

In some optional embodiments of the present disclosure, each row of the first overhead area is used to fill with or place a first portion of the difference accumulation information, with the same column(s).

In some optional embodiments of the present disclosure, the first frame further includes a second overhead area, the second overhead area is used to fill with or place a first check code determined based on the difference accumulation information.

In some optional embodiments of the present disclosure, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments of the present disclosure, the method further includes: multiplexing or mapping the first frame into a second frame, and sending the second frame.

In some optional embodiments of the present disclosure, the difference accumulation information represents an accumulated difference of a specified parameter during a process in which a second frame is sent by the first device and arrives at a current device; and/or the difference accumulation information includes an accumulated phase difference and/or an accumulated frequency difference.

In a second aspect, an embodiment of the present disclosure further provides a transmission method applied to a second device. The method includes: receiving, by the second device, a second frame, wherein the second frame includes a first frame, the first frame includes a first overhead area, the first overhead area is used to fill with or place difference accumulation information, the first overhead area is capable of placing or filling multiple identical pieces of difference accumulation information.

In some optional embodiments of the present disclosure, the difference accumulation information represents an accumulated difference of a specified parameter during a process in which the second frame is sent by a first device and arrives at a current device; and/or the difference accumulation information includes an accumulated phase difference and/or an accumulated frequency difference.

In some optional embodiments of the present disclosure, the method further includes: demultiplexing or demapping the second frame into the first frame;

determining a first phase difference and/or a first frequency difference of the second frame after passing through each of the second devices, wherein the first phase difference includes a phase difference of the second frame after passing through the second device, or includes an accumulated phase difference of the second frame after passing through the second device and another second device; the first frequency difference includes a frequency difference of the second frame after passing through the second device, or includes an accumulated frequency difference of the second frame after passing through the second device and another second device;

placing or filling the first phase difference and/or the first frequency difference into the first overhead area of the first frame;

mapping or multiplexing the first frame into the second frame.

In some optional embodiments of the present disclosure, each piece of difference accumulation information occupies one byte in the first overhead area.

In some optional embodiments of the present disclosure, multiple identical pieces of difference accumulation information are placed or filled in different rows of the first overhead area.

In some optional embodiments of the present disclosure, each row of the first overhead area is used to fill with or place a first portion of the difference accumulation information, and the first portion of the difference accumulation information is used to fill with or place difference accumulation information of a current moment; and/or

each row of the first overhead area is used to fill with or place another portion of the difference accumulation information other than the first portion, and the other portion of the difference accumulation information is used to fill with or place difference accumulation information of a past moment.

In some optional embodiments of the present disclosure, each row of the first overhead area is used to fill with or place a first portion of the difference accumulation information, with the same column(s).

In some optional embodiments of the present disclosure, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments of the present disclosure, the method further includes: performing, by the second device, a majority decision or a majority voting based on multiple identical pieces of difference accumulation information in the first overhead area to obtain a correct piece of difference accumulation information.

In some optional embodiments of the present disclosure, the method further includes: sending a processed second frame.

In some optional embodiments of the present disclosure, a frequency at which the difference accumulation information is obtained or calculated, or a sampling frequency of a phase detector in the second device, is less than or equal to a sending frequency of the second frame.

In some optional embodiments of the present disclosure, the second device receiving the second frame includes:

the second device receiving the second frame sent by a first device; or

the second device receiving the second frame sent by another second device, the second frame originating from the first device, the second frame including a third phase difference or a third frequency difference, the third phase difference representing an accumulated phase difference of the second frame after passing through another second device, and the third frequency difference representing an accumulated frequency difference of the second frame after passing through the other second device.

In some optional embodiments of the present disclosure, the determining the first phase difference of the second frame after passing through each of the second devices includes:

obtaining a second phase difference between a first phase and a second phase, wherein the first phase represents a phase of the received second frame, and the second phase represents a phase of a local clock of the second device or a phase of the second frame to be sent; and determining the second phase difference as the first phase difference; or

obtaining a second phase difference between a first phase and a second phase, wherein the first phase represents a phase of the received second frame, and the second phase represents a phase of a local clock of the second device or a phase of the second frame to be sent; and determining the first phase difference based on the second phase difference and the third phase difference.

In some optional embodiments of the present disclosure, the determining the first frequency difference of the second frame after passing through each of the second devices includes:

obtaining a second frequency difference between a first frequency and a second frequency, wherein the first frequency represents a frequency of the received second frame, and the second frequency represents a frequency of a local clock of the second device or a frequency of the second frame to be sent; and determining the second frequency difference as the first frequency difference; or

obtaining a second frequency difference between a first frequency and a second frequency, wherein the first frequency represents a frequency of the received second frame, and the second frequency represents a frequency of a local clock of the second device or a frequency of the second frame to be sent; and determining the first frequency difference based on the second frequency difference and the third frequency difference.

In some optional embodiments of the present disclosure, the first frame further includes a second overhead area, the second overhead area is used to fill with or place a first check code determined based on difference accumulation information;
the method further includes: determining, by the second device, the first check code based on the difference accumulation information, and filling or placing, by the second device, the first check code in the second overhead area.

In some optional embodiments of the present disclosure, in the case that the second device receives a second frame sent by another second device, the method further includes: performing, by the second device, verification based on the first check code filled or placed in the second overhead area.

In a third aspect, an embodiment of the present disclosure further provides a transmission method applied to a third device. The method includes:

receiving, by the third device, a second frame sent by a second device, and demapping or demultiplexing, by the third device, the second frame into a first frame; wherein the first frame includes a first overhead area, the first overhead area includes placed or filled difference accumulation information, the first overhead area includes multiple identical pieces of difference accumulation information.
obtaining clock information or frequency information of the first frame based on the difference accumulation information.

In some optional embodiments of the present disclosure, each piece of difference accumulation information occupies one byte in the first overhead area.

In some optional embodiments of the present disclosure, multiple identical pieces of difference accumulation information are placed or filled in different rows of the first overhead area.

In some optional embodiments of the present disclosure, each row of the first overhead area is used to fill with or place a first portion of the difference accumulation information, and the first portion of the difference accumulation information is used to fill with or place the difference accumulation information of a current moment; and/or
each row of the first overhead area is used to fill with or place another portion of the difference accumulation information other than the first portion, and the other portion of the difference accumulation information is used to fill with or place difference accumulation information of a past moment.

In some optional embodiments of the present disclosure, each row of the first overhead area is used to fill with or place the first portion of the difference accumulation information, with the same column(s).

In some optional embodiments of the present disclosure, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or
three identical pieces of difference accumulation information are placed or filled in a fourth row of the first overhead area, a first row of a first overhead area of a next frame and a second row of the first overhead area of the next frame, respectively.

In some optional embodiments of the present disclosure, the method further includes: performing, by the third device, a majority decision or a majority voting based on multiple identical pieces of difference accumulation information in the first overhead area to obtain a correct piece of difference accumulation information.

In some optional embodiments of the present disclosure, the first frame further includes a second overhead area, the second overhead area is used to fill with or place a first check code determined based on the difference accumulation information;
the method further includes: performing, by the third device, verification based on the first check code filled or placed in the second overhead area.

In some optional embodiments of the present disclosure, the difference accumulation information represents an accumulated difference of a specified parameter during a process in which a second frame is sent by the first device and arrives at a current device; and/or the difference accumulation information includes an accumulated phase difference and/or an accumulated frequency difference.

In a fourth aspect, an embodiment of the present disclosure further provides a transmission apparatus, including: a first processing unit, configured to map service data into a first frame, wherein the first frame includes a first overhead area, the first overhead area is used to fill with or place difference accumulation information, and the first overhead area is capable of placing or filling multiple identical pieces of difference accumulation information.

In a fifthly aspect, an embodiment of the present disclosure further provides a transmission apparatus, including: a second communication unit, configured to receive a second frame, wherein the second frame includes a first frame, the first frame includes a first overhead area, the first overhead area is used to fill with or place difference accumulation information, and the first overhead area is capable of placing or filling multiple identical pieces of difference accumulation information.

In a sixth aspect, an embodiment of the present disclosure further provides a transmission apparatus, including: a third communication unit and a third processing unit; wherein

the third communication unit is configured to receive a second frame sent by a second device;
the third processing unit is configured to demap or demultiplex the second frame into a first frame; wherein the first frame includes a first overhead area, the first overhead area includes placed or filled difference accumulation information, the first overhead area includes multiple identical pieces of difference accumulation information; and the third processing unit is further configured to obtain clock information or frequency information of the first frame based on the difference accumulation information.

In a seventh aspect, an embodiment of the present disclosure further provides a computer-readable storage medium storing a computer program, wherein the program is used to be executed by a processor to implement the steps of the transmission method described in the above first, second, or third aspects of the embodiments of the present disclosure.

In an eighth aspect, an embodiment of the present disclosure further provides an optical communication device, including a memory, a processor, and a computer program stored in the memory and used to be executed by the processor, wherein the processor is configured to execute the program to implement the steps of the transmission method described in the above first aspect, second aspect, or third aspect of the embodiments of the present disclosure.

Embodiments of the present disclosure provide a transmission method and apparatus, an optical communication device, and a storage medium. Specific mapping or multiplexing schemes are used, and a first overhead area used for placing or filling difference accumulation information are configured in the frame structure of the first frame, so as to multiplex or map the first frame into a second frame, and transmit the second frame; accordingly, it is unnecessary for an intermediate node (a second device) to recover frequency information of the data frame through a low-pass phase-locked loop, thereby reducing hardware consumption. A destination node (e.g., a third device) can recover and obtain clock information or frequency information of the first frame based on the difference accumulation information in the first overhead area.

## BRIEF DESCRIPTION OF THE DRAWINGS

FIG. 1 is a schematic flowchart of the transmission method according to an embodiment of the present disclosure;
FIG. 2 is a schematic diagram of a frame structure in the transmission method according to an embodiment of the present disclosure;
FIG. 3 is another schematic flowchart of the transmission method according to an embodiment of the present disclosure;
FIG. 4 is yet another schematic flowchart of the transmission method according to an embodiment of the present disclosure;
FIG. 5 is a transmission schematic diagram of the transmission method according to an embodiment of the present disclosure;
FIG. 6 is a schematic structural diagram of a transmission apparatus according to an embodiment of the present disclosure;
FIG. 7 is another schematic structural diagram of a transmission apparatus according to an embodiment of the present disclosure;
FIG. 8 is yet another schematic structural diagram of a transmission apparatus according to an embodiment of the present disclosure;
FIG. 9 is a schematic diagram of a hardware structure of an optical communication device according to an embodiment of the present disclosure.

## DETAILED DESCRIPTION

The present disclosure will be described in further detail with reference to the accompanying drawings and specific embodiments.

The technical solutions of the embodiments of the present disclosure can be applied to various communication systems, such as GSM (Global System of Mobile communication), LTE (Long Term Evolution), or 5G systems, etc. Optionally, a 5G system or 5G network may also be referred to as a New Radio (NR) system or NR network.

It should be understood that a device with a communication function in the network/system in the embodiments of the present disclosure may be referred to as a communication device. The communication device may include a network device and a terminal with the communication function. The network device and terminal device may be the specific device described above, which will not be repeated here. The communication device may further include another device in the communication system, such as a network controller, a mobility management entity, and another network entity, which is not limited in the embodiments of the present disclosure.

It should be understood that the terms "system" and "network" are often used interchangeably in the present disclosure. The term "and/or" in the present disclosure merely describes an association relationship between associated objects, indicating that there can be three relationships, for example, A and/or B can mean: A exists alone, A and B exist simultaneously, and B exists alone. In addition, the symbol "/" generally indicates that the associated objects are in an "or" relationship.

Terms "first", "second" and the like in the description and claims of the present disclosure are adopted not to describe a specific sequence or order but to distinguish similar objects. It should be understood that data used like this may be interchanged under a proper condition for implementation of the embodiments of the application described here in a sequence apart from those shown or described here. In addition, terms "include" and "comprise" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment.

An embodiment of the present disclosure provides a transmission method. FIG. 1 is a schematic flowchart of the transmission method according to an embodiment of the present disclosure. As shown in FIG. 1, the method includes:

step 101: mapping, by the first device, service data into a first frame; the first frame includes a first overhead area, wherein the first overhead area is used to fill with or place difference accumulation information, and the first overhead area is capable of placing or filling multiple identical pieces of difference accumulation information.

In some optional embodiments, the method may further include step 102: multiplexing or mapping the first frame into a second frame, and sending the second frame.

In this embodiment, the first device maps or multiplexes the service data to the first frame, and multiplexes or maps the first frame into the second frame. The multiplexing or mapping may also be referred to as multiplexed mapping, multiplexing and mapping, MUX, mapping and multiplexing, etc. The above processing names may be considered equivalent or interchangeable as needed. The first device is the device in the data transmission process and may also be referred to as a source node, a source device, a sending device, a sending-end device, etc.

In some optional embodiments, the first device sends a second frame, where the message being sent may only include the second frame; or may include the second frame, and may include other information in addition to the second frame. For example, the message being sent is an OTU frame, in which the OTU frame includes an ODU frame, the ODU frame includes an OPU frame, and the OPU frame includes an fgODU frame.

In this embodiment, the first device maps or multiplexes service data into a first frame using a conventional mapping or multiplexing method. The conventional mapping or multiplexing method may be a Generic Mapping Procedure (GMP). Furthermore, the first device maps or multiplexes the first frame into a second frame, where a pre-configured fixed time slot in the payload of the second frame is used to carry the first frame.

In some examples, the OTN introduces a fine granularity OTN (fgOTN) and an Optical Service Unit (OSU) mechanism to carry small-granularity services from 10M to 1G. For example, service data is first mapped into an fgODU frame or an OSU frame, which is then encapsulated into an Optical Channel Payload Unit (OPU) frame (alternatively, the OSU frame is multiplexed, concatenated, or mapped into an Optical Service Tributary Unit (OSTU) frame, which is then multiplexed or mapped into an OPU frame; or, the fgODU frame is first mapped into an fgODTU frame, which is then multiplexed or mapped into the OPU). The OPU frame is then encapsulated into an Optical Data Unit (ODU) frame, and so on. In some optional embodiments, the first frame may also be referred to as an OSU frame, a sub-1G frame, or an fgODU frame, and the second frame may also be referred to as an ODU frame, an OTU frame, or an OPU frame.

During the conventional GMP mapping process, when the first device maps or multiplexes service data into the first frame, a first parameter and a second parameter are required to convey a service clock. The first parameter is Cm, which represents the number of m-bit client data entities, and the second parameter is CnD, which represents the difference between the n-bit client data count and $\frac{m}{n} \times C_m$, where Cn represents the n-bit client data count, and both m and n are positive integers. Furthermore, the frequency of the service data needs to be recovered through a low-pass phase-locked loop, which consumes significant hardware resources.

In various embodiments of the present disclosure, the overhead area (such as the first overhead area, the second overhead area, etc.) may also be referred to as an overhead area or OverHead (OH).

In this embodiment, the first frame includes a first overhead area, wherein the first overhead area is used to fill with or place difference accumulation information. The difference accumulation information represents an accumulated difference of a specified parameter during a process in which a second frame is sent by the first device and arrives at a current device. The specified parameter may be phase and/or frequency, and the difference accumulation information includes an accumulated phase difference and/or an accumulated frequency difference. Since the second frame is initially sent by the first device and does not have an accumulated difference, the first frame encapsulated by the second frame sent by the first device only includes the first overhead area for placing or filling difference accumulation information. That is, the first frame include a position in the first overhead area for placing or filling the difference accumulation information, but the difference accumulation information is not filled or placed in the first overhead area. During the transmission of the second frame, for example, it is transmitted sequentially through second devices. In each of the second devices, there is a phase difference between the received second frame and the second frame to be sent, or a phase difference between the received second frame and the local clock of the second device. Therefore, the second frame has a phase difference and/or frequency difference after passing through each of the second devices. As the second frame is transmitted through multiple second devices, an accumulated phase difference and/or accumulated frequency difference is formed. The first overhead area of the first frame is used at each of the second devices to fill or place the calculated accumulated phase difference and/or accumulated frequency difference, thereby enabling the transmission of the accumulated phase difference and/or accumulated frequency difference.

Based on this, according to the technical solution of the embodiments of the present disclosure, specific mapping or multiplexing schemes are used, and a first overhead area used for placing or filling difference accumulation information are configured in the frame structure of the first frame, and the second frame is transmitted; accordingly, it is unnecessary for an intermediate node (a second device) to recover frequency information of the data frame through a low-pass phase-locked loop, thereby reducing hardware consumption. A destination node (e.g., a third device) can recover and obtain clock information or frequency information of the first frame based on the difference accumulation information in the first overhead area.

In this embodiment, the first overhead area is used to fill with or place difference accumulation information. It may also be referred to as the first overhead area including, containing, placing, carrying, transmitting, transporting, inserting, or adding the accumulated information. The placing or filling described in this embodiment can be freely replaced based on any of the above actions.

In this embodiment, the difference accumulation information refers to information for a specified parameter, for example, including: accumulated phase information, accumulated frequency information, accumulated phase difference information, accumulated frequency difference information, accumulated phase difference information, accumulated frequency difference information, difference accumulation, difference accumulation (DIFF_ACC) phase measurement, difference accumulation (DIFF_ACC) phase measurements of the reference clock at the source node of the fgODU signal as accumulated through all the intermediate switching nodes to a sink node, etc. The accumulated differential information described in this embodiment may be freely replaced based on any of the above names.

In this embodiment, the first overhead area is capable of placing or filling the identical difference accumulation information. That is, the first overhead area includes multiple positions (e.g., bytes) for placing or filling the identical difference accumulation information. In other words, the identical difference accumulation information is transmitted multiple times through the first frame (or the mapped/multiplexed second frame) to improve the reliability of data transmission. The receiving-end device can also perform a majority decision (which may also be referred to as a majority voting) based on the identical difference accumulation information transmitted multiple times to correct errors and obtain a correct piece of difference accumulation information.

In some optional embodiments of the present disclosure, each piece of difference accumulation information occupies one byte in the first overhead area.

In this embodiment, the first frame has a structure of 4 rows and 3824 columns. Each row and column position can be referred to as one byte. Each piece of difference accumulation information occupies one byte in the first overhead area. The first overhead area may include bytes corresponding to a specified row and a specified byte column. In other optional embodiments, each piece of difference accumulation information may also occupy more than one byte. This embodiment does not impose limitations on this.

As an example, the first overhead area may be located in each of the four rows included in the first frame, or at least a subset of the rows. For example, a specified byte column in each row (four rows) of the first frame may be used to fill with or place difference accumulation information, or a specified byte column in the first three rows may be used to fill with or place difference accumulation information, and so on. As another example, the first overhead area may include all bytes from the $1913^{th}$ to the $1915^{th}$ byte columns of each row, as shown in FIG. 2. As yet another example, the first overhead area may include a portion or specified bytes from the 1905$^{th}$ to the 1915$^{th}$ byte columns of each row.

In some optional embodiments of the present disclosure, multiple identical pieces of difference accumulation information may be placed or filled in different rows of the first overhead area.

In this embodiment, since the first frame includes four rows, multiple identical pieces of difference accumulation information can be placed in different rows for transmission through different rows of the first frame. For example, when the identical difference accumulation information is transmitted three times, bytes corresponding to the specified byte columns in the three rows of the first overhead area can be used to fill with or place the identical difference accumulation information. Taking FIG. 2 as an example, the 1913$^{th}$ byte column in the first row can be used to fill with or place one piece of difference accumulation information, the 1914$^{th}$ byte column in the second row is used to fill with or place the difference accumulation information, and the 1915$^{th}$ byte column in the third row is also used to fill with or place the difference accumulation information. As another example, when the identical difference accumulation information is transmitted four times, bytes corresponding to the specified byte columns in the four rows can be used in the first overhead area to fill with or place the difference accumulation information.

In some optional embodiments, three identical pieces of difference accumulation information are placed or filled in an i$^{th}$ row of the first overhead area, an (i+1)$^{th}$ row of the first overhead area, and an (i+2)$^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In this embodiment, taking the case where the same piece of difference accumulation information can be transmitted three times as an example, the rows used to transmit the identical difference accumulation information are adjacent. Examples include: the first, second, and third rows, used to transmit the identical difference accumulation information respectively; or the second, third, and fourth rows, used to transmit the identical difference accumulation information respectively; or the third and fourth rows of the current frame and the first row of the next frame, used to transmit the identical difference accumulation information respectively; or the fourth row of the current frame, the first and second rows of the next frame, used to transmit the identical difference accumulation information respectively. In some optional examples, the four rows of bytes included in the first frame can be transmitted sequentially row by row during transmission according to row identifiers (rows #), for example, in the order of the first, second, third, and fourth rows. Based on this, for the device (such as the second device) that performs difference accumulation information collection, when the first and second rows of the current frame have already been transmitted, the device (such as the second device) will fill with or place the currently collected difference accumulation information in the specified positions of the third row and fourth rows in the first overhead area of the current frame, and the first row of the next frame for transmission.

In some optional embodiments of the present disclosure, each row of the first overhead area is used to fill with or place a first portion of the difference accumulation information, and the first portion of the difference accumulation information is used to fill with or place difference accumulation information of a current moment; and/or each row of the first overhead area is used to fill with or place another portion of the difference accumulation information other than the first portion, and the other portion of the difference accumulation information is used to fill with or place difference accumulation information of a past moment.

In this embodiment, the current moment and the past moment refer to the device that obtains the difference accumulation information (such as the second device). In other words, the difference accumulation information of a current moment refers to the most recently or newly obtained information by the device, which is actually the difference accumulation information to be transmitted at the current moment. The past moment is relative to the current moment; the difference accumulation information of the past moment refers to historical difference accumulation information, or difference accumulation information obtained at a moment before the current moment, which is actually difference accumulation information that has already transmitted at the past moment. The first overhead area is at least used to fill with or place the currently obtained difference accumulation information, and can also be used to fill with or place the previously obtained difference accumulation information. For example, the first difference accumulation information is obtained at time n, the second difference accumulation information is obtained at time n+1, and the third difference accumulation information is obtained at time n+2. Time n+2 is the current moment, that is, the most recently obtained difference accumulation information. Referring to the example in FIG. 2, in the first frame, from the 1913$^{th}$ byte column to the 1915$^{th}$ byte column, the byte corresponding to the 1913$^{th}$ byte column in the first row is filled or placed the third difference accumulation information, the byte corresponding to the 1914$^{th}$ byte column in the first row is filled or placed the second difference accumulation information, and the byte corresponding to the 1915$^{th}$ byte column in the first row is filled or placed the first difference accumulation information.

In some optional embodiments, the four rows of bytes in the first frame can be transmitted row by row according to the row identifiers (rows #) during transmission. Thus, after the first row is transmitted, as the current moment progresses (e.g., n+3 is the current moment), and the fourth difference accumulation information is obtained, the newly obtained fourth difference accumulation information can be filled or placed in the byte corresponding to the 1913$^{th}$ byte column in the second row; the previously obtained third difference accumulation information can be filled or placed in the byte corresponding to the 1914$^{th}$ byte column in the second row; the earlier obtained second difference accumulation information can be filled or placed in the byte corresponding to the 1915$^{th}$ byte column in the second row, and so on.

In some optional embodiments of the present disclosure, each row of the first overhead area is used to fill with or place a first portion of the difference accumulation information, with the same column(s). As shown in FIG. 2, the byte corresponding to the 1913$^{th}$ byte column in each row is used to fill with or place the first portion (e.g., the first byte) of the difference accumulation information. This alignment processing of the difference accumulation information can reduce errors and complexity. In other embodiments, each row of the first overhead area used to fill with or place the first portion of the difference accumulation information, may also correspond to different numbers of columns. For example, the byte corresponding to the 1913$^{th}$ byte column in the first row is the first byte in the first row used to fill with or place the difference accumulation information; the byte corresponding to the 1905$^{th}$ byte column in the second row is the first byte in the second row used to fill with or place the difference accumulation information, and so on.

In some optional embodiments of the present disclosure, the first frame further includes a second overhead area, the second overhead area is used to fill with or place a first check code determined based on the difference accumulation information.

In this embodiment, the first check code can specifically be Cyclic Redundancy Check (CRC) information, such as a CRC check code. The sending-end device, which fills multiple identical pieces of difference accumulation information, can calculate the first check information (or first check code) based on at least part of the multiple identical pieces of difference accumulation information (such as one piece of difference accumulation information or multiple identical pieces of difference accumulation information). The first check information is then placed or filled into the second overhead area of the first frame, and the second frame is sent. After receiving the second frame, the receiving-end device can perform verification based on the second overhead area of the first frame. Specifically, it can calculate second check information (or a second check code) based on the difference accumulation information (such as one piece of difference accumulation information or multiple identical pieces of difference accumulation information) placed in the first overhead area of the first frame. By comparing the calculated second check information with the first check information in the second overhead area, it can determine whether the second frame is received correctly according to the comparison result, thereby enabling error correction.

In this embodiment, the second overhead area and the first overhead area may be the same, may overlap, or may be independent of each other.

In some optional embodiments, the second overhead area included in the first frame is used to fill with or place the first check code determined based on the difference accumulation information. Specifically, the second overhead area of the (i+2)$^{th}$ first frame is used to fill with or place the first check code determined based on the difference accumulation information for the i$^{th}$ first frame. That is, the second overhead area of the (i+2)$^{th}$ first frame includes the first check information of the i$^{th}$ first frame. In other embodiments, it may not be limited to the case where the second overhead area of the (i+2)$^{th}$ first frame is used to fill with or place the first check code determined based on the difference accumulation information for the i$^{th}$ first frame; the second overhead area of other n$^{th}$ first frames may also include the first check information of the i$^{th}$ first frame. This embodiment does not impose limitations on this, where n is a positive integer greater than i.

Based on the above embodiments, an embodiment of the present disclosure further provides a transmission method. FIG. 3 is another schematic flowchart of the transmission method according to an embodiment of the present disclosure. As shown in FIG. 3, the method includes:

step 201: receiving, by the second device, a second frame, wherein the second frame includes a first frame, the first frame includes a first overhead area, the first overhead area is used to fill with or place difference accumulation information, the first overhead area is capable of placing or filling multiple identical pieces of difference accumulation information.

In this embodiment, the first frame includes a first overhead area, wherein the first overhead area is used to fill with or place difference accumulation information. The difference accumulation information represents the accumulated difference of a specified parameter during the process in which the second frame is sent by the first device and arrives at the current device. The specified parameter may be phase and/or frequency, and the difference accumulation information includes accumulated phase difference and/or accumulated frequency difference. The difference accumulation information is information specific to the specified parameter, for example, including: accumulated phase information, accumulated frequency information, accumulated phase difference information, accumulated frequency difference information, accumulated phase differential information, accumulated frequency differential information, difference accumulation, difference accumulation (DIFF _ACC) phase measurement, difference accumulation (DIFF _ACC) phase measurements of the reference clock at the source node of the fgODU signal as accumulated through all the intermediate switching nodes to the sink node, etc. The accumulated differential information described in this embodiment may be freely replaced based on any of the above names.

In various embodiments of the present disclosure, the overhead area (such as the first overhead area, the second overhead area, etc.) may also be referred to as an overhead area or OverHead (OH). In this embodiment, the first overhead area is capable of placing or filling the identical difference accumulation information. That is, the first overhead area includes multiple positions (e.g., bytes) for placing or filling the identical difference accumulation information. In other words, the identical difference accumulation information is transmitted multiple times through the first frame (or the mapped/multiplexed second frame) to improve the reliability of data transmission. The receiving-end device can also perform a majority decision (which may also be referred to as a majority voting) based on the multiple transmissions of the identical difference accumulation information to correct errors, and obtain a correct piece of difference accumulation information.

In some optional embodiments, the second device receives a second frame, where the received message may only include the second frame, or may include the second frame, and may include other information in addition to the second frame. For example, the received message is an OTU frame, in which the OTU frame includes an ODU frame, the ODU frame includes an OPU frame, and the OPU frame includes an fgODU frame.

In this embodiment, the second device is an intermediate device in the data transmission process, which may also be referred to as an intermediate node, intermediate device, etc. The second device in this embodiment may be any one of multiple intermediate devices; that is, receiving, by the second device, a second frame may include the following two scenarios.

As a first implementation, the second device receiving the second frame includes: the second device receiving the second frame sent by the first device.

As a second implementation, the second device receiving the second frame includes: the second device receiving a second frame sent by another second device, the second frame originating from the first device, the second frame including a third phase difference or a third frequency difference, the third phase difference representing an accumulated phase difference of the second frame after passing through another second device.

In some optional embodiments, the method further includes: demultiplexing or demapping the second frame into the first frame; determining a first phase difference and/or a first frequency difference of the second frame after passing through each of the second devices, wherein the first phase difference comprises a phase difference of the second frame after passing through the second device, or comprises an accumulated phase difference of the second frame after passing through the second device and another second device; the first frequency difference comprises a frequency difference of the second frame after passing through the second device, or comprises an accumulated frequency difference of the second frame after passing through the second device and another second device; placing or filling the first phase difference and/or the first frequency difference into the first overhead area of the first frame; mapping or multiplexing the first frame into the second frame.

In some optional embodiments, the method further includes sending a processed second frame.

In the first scenario described above, where the second device receives a second frame sent by the first device, the first overhead area of the first frame is not filled or placed difference accumulation information; in other words, the first overhead area of the first frame is not placed or filled multiple identical pieces of difference accumulation information. The first frame only includes a first overhead area for placing or filling difference accumulation information, i.e., the first frame includes a position in the first overhead area for placing or filling difference accumulation information. In the second scenario where the second device receives a second frame sent by another second device as described above, the first overhead area of the first frame has been filled or placed difference accumulation information by another second device. Furthermore, the first overhead area may be filled or placed multiple identical pieces of difference accumulation information by another second device, i.e., the same difference accumulation information (or identical difference accumulation information) is transmitted multiple times.

In this embodiment, after receiving the second frame, the second device buffers the received second frame. This process converts the phase of the second frame from the phase of the local clock of the previous device to the phase of the local clock of the second device. Furthermore, under the local clock, the second frame is demultiplexed or demapped into the first frame, and the first phase difference and/or the first frequency difference are added to the overhead area of the first frame. Optionally, the first frame may undergo crossing processing to obtain a processed first frame. The first frame or the processed first frame is then mapped or multiplexed into the second frame, and the second frame is sent. Optionally, the above demultiplexing or demapping may also be referred to as demultiplexing, demultiplexing and demapping, demultiplexed mapping, DMUX, demapping, demapping and demultiplexing, etc. The above multiplexing or mapping may also be referred to as multiplexing, multiplexed mapping, multiplexing and mapping, MUX, mapping, mapping and multiplexing, etc.

In the first implementation described above, the second device, acting as the first intermediate node, directly receives the second frame sent by the first device and further determines the first phase difference and/or the first frequency difference based on the received second frame. In this case, the determined first phase difference represents the phase difference of the second frame after passing through the second device, and the determined first frequency difference represents the frequency difference of the second frame after passing through the second device. In the second implementation described above, the second device, acting as a non-first intermediate node, receives the second frame after passing through one or more other second devices, and further determines the first phase difference and/or the first frequency difference based on the received second frame. In this case, the determined first phase difference represents the accumulated phase difference of the second frame after passing through multiple second devices, and the determined second frequency difference represents the accumulated frequency difference of the second frame after passing through multiple second devices.

In some optional embodiments, the determining the first phase difference of the second frame after passing through each of the second devices includes: obtaining a second phase difference between a first phase and a second phase, wherein the first phase represents a phase of the received second frame, and the second phase represents a phase of a local clock of the second device or a phase of the second frame to be sent; and determining the second phase difference as the first phase difference; or obtaining a second phase difference between a first phase and a second phase, wherein the first phase represents a phase of the received second frame, and the second phase represents a phase of a local clock of the second device or a phase of the second frame to be sent; and determining the first phase difference based on the second phase difference and the third phase difference.

In the first implementation described above, since the second device is the first intermediate node or intermediate device, the second device directly compares the first phase of the received second frame with the phase of the local clock to calculate the phase difference (denoted as the second phase difference), or compares the first phase of the received second frame with the phase of the second frame to be sent (the phase of the local clock and the phase of the second frame to be sent or output share the same clock domain, frequency, and phase synchronization) to calculate the phase difference (denoted as the second phase difference). The calculated phase difference (denoted as the second phase difference) is then determined as the first phase difference.

In the second implementation described above, since the second device is not the first intermediate node or intermediate device, the second device receives the second frame after passing through other second devices. Therefore, the received second frame includes a third phase difference, which includes the accumulated phase difference of the second frame after passing through other second devices. For example, after the first device sends the second frame, it passes through two other second devices before reaching the second device. In this case, the second frame received by the second device may include the accumulated phase difference accumulated as it passes through the two other second devices. On one hand, the second device compares the first phase of the received second frame with the phase of the local clock to calculate the phase difference (denoted as the second phase difference), or compares the first phase of the received second frame with the phase of the second frame to be sent (where the phase of the local clock and the phase of the second frame to be sent are identical) to calculate the phase difference (denoted as the second phase difference). Furthermore, the second phase difference is added to the third phase difference carried in the second frame to obtain the first phase difference.

In some optional embodiments, the determining the first frequency difference of the second frame after passing through each of the second devices includes: obtaining the first frequency difference based on the determined first phase difference.

In this embodiment, after determining the first phase difference, the first frequency difference can be obtained by differentiating the first phase difference.

In other optional embodiments, the determining the first frequency difference of the second frame after passing through each of the second devices includes: obtaining a second frequency difference between a first frequency and a second frequency, wherein the first frequency represents a frequency of the received second frame, and the second frequency represents a frequency of a local clock of the second device or a frequency of the second frame to be sent; and determining the second frequency difference as the first frequency difference; or obtaining a second frequency difference between a first frequency and a second frequency, wherein the first frequency represents a frequency of the received second frame, and the second frequency represents a frequency of a local clock of the second device or a frequency of the second frame to be sent; and determining the first frequency difference based on the second frequency difference and the third frequency difference. The method for obtaining the first frequency difference is similar to the method for obtaining the first phase difference.

Furthermore, the calculated first phase difference and/or first frequency difference are inserted, placed, or filled into the first overhead area of the first frame. In this embodiment, the calculated difference accumulation information (such as the first phase difference and/or the first frequency difference) is placed or filled into multiple positions of the first overhead area, for example, across multiple rows, to be transmitted separately. This enables the identical difference accumulation information (such as the first phase difference and/or the first frequency difference) to be transmitted multiple times, thereby improving the reliability of data transmission.

In this embodiment, the first overhead area is used to fill with or place difference accumulation information. It may also be referred to as the first overhead area including, containing, placing, carrying, transmitting, transporting, inserting, adding, etc. The placing or filling described in this embodiment can be freely replaced based on any of the above actions.

In some optional embodiments, the second frame includes a first parameter but does not include a second parameter, wherein the first parameter represents an m-bit client data count; and the second parameter represents a difference between an n-bit client data count and $\frac{m}{n} \times C_m$. The third device demaps or demultiplexes the second frame into the first frame using the first parameter. Optionally, the method may further include: calculating the first parameter, placing or filling it into the second frame, i.e., the processed second frame includes both the difference accumulation information and the calculated first parameter; and sending the processed second frame. Optionally, the second device may calculate the first parameter based on the rate of the first frame and the rate of the second frame.

In some optional embodiments, each piece of difference accumulation information occupies one byte in the first overhead area.

In some optional embodiments, multiple identical pieces of difference accumulation information may be placed or filled in different rows of the first overhead area.

In some optional embodiments, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments, each row of the first overhead area is used to fill with or place a first portion of the difference accumulation information, and the first portion of the difference accumulation information is used to fill with or place difference accumulation information of a current moment; and/or each row of the first overhead area is used to fill with or place another portion of the difference accumulation information other than the first portion, and the other portion of the difference accumulation information is used to fill with or place difference accumulation information of a past moment.

In this embodiment, the current moment and the past moment refer to the device that obtains the difference accumulation information (such as the second device). In other words, the difference accumulation information of a current moment refers to the most recently or newly obtained information by the device, which is actually the difference accumulation information to be transmitted at the current moment. The past moment is relative to the current moment; the difference accumulation information of the past moment refers to historical difference accumulation information, or difference accumulation information obtained at a moment before the current moment, which is actually difference accumulation information that has already transmitted at the past moment. The first overhead area is at least used to fill with or place the currently obtained difference accumulation information, and can also be used to fill with or place the previously obtained difference accumulation information. For example, the first difference accumulation information is obtained at time n, the second difference accumulation information is obtained at time n+1, and the third difference accumulation information is obtained at time n+2. Time n+2 is the current moment, that is, the most recently obtained difference accumulation information. Referring to the example in FIG. 2, in the first frame, from the $1913^{th}$ byte column to the $1915^{th}$ byte column, the byte corresponding to the $1913^{th}$ byte column in the first row is filled or placed the third difference accumulation information, the byte corresponding to the $1914^{th}$ byte column in the first row is filled or placed the second difference accumulation information, and the byte corresponding to the $1915^{th}$ byte column in the first row is filled or placed the first difference accumulation information.

In some optional embodiments, each row of the first overhead area is used to fill with or place a first portion of the difference accumulation information, with the same column(s).

In this embodiment, the description of the first overhead area of the first frame can refer to the specific description in the above-mentioned embodiments related to the first device, and will not be repeated here. After the second device collects, determines or obtains difference accumulation information (such as the first phase difference and/or the first frequency difference), it places or fills the collected, determined, or obtained difference accumulation information into the corresponding position according to the specific description of the first overhead area provided in the above embodiments.

In some optional embodiments of the present disclosure, the method further includes: performing, by the second device, a majority decision or a majority voting based on multiple identical pieces of difference accumulation information in the first overhead area to obtain a correct piece of difference accumulation information.

In this embodiment, the first overhead area of the first frame includes multiple positions (e.g., bytes) for placing or filling the identical difference accumulation information. That is, the identical difference accumulation information is transmitted multiple times through the first frame. For example, the identical difference accumulation information or the same accumulated information is transmitted through each of the three rows of the first frame, with each row transmitting the difference accumulation information once. The second device can obtain multiple difference accumulation information from the multiple positions (e.g., bytes) in the first overhead area for placing or filling the identical difference accumulation information. For example, it can obtain one piece of difference accumulation information at a first specified position in the first row of the first frame, one at a second specified position in the second row, and one at a third specified position in the third row. Then, it determines whether the obtained multiple difference accumulation information are the same, thereby performing a majority voting to correct errors and obtain a correct piece of difference accumulation information. For example, if certain bytes are supposed to transmit the identical difference accumulation information, but after checking it is found that the difference accumulation information placed or filled in these bytes is different-for example, the identical difference accumulation information is transmitted three times, but two out of three are identical-then the two identical difference accumulation information can be determined as a correct piece of difference accumulation information.

In some optional embodiments of the present disclosure, a frequency at which the difference accumulation information is obtained or calculated, or a sampling frequency of a phase detector in the second device, is less than or equal to a sending frequency of the second frame.

In this embodiment, the acquisition or collection of difference accumulation information occurs at a certain frequency, and the transmitting or sending of the second frame also occurs at a certain frequency. The transmitting or sending frequency of the second frame corresponds to the sampling frequency of a Phase Detector (PD) in the second device, and the two may have different frequencies. In the embodiments of the present disclosure, the acquisition or collection frequency of difference accumulation information is less than or equal to the transmitting or sending frequency of the second frame. For example, the fgOTN frame frequency is approximately 3 milliseconds (ms) per row, and the acquisition or collection frequency of difference accumulation information is also around 3 ms, while the PD sampling frequency is faster. In this way, after the PD sampling or the transmission/-sending of the second frame, it waits for the next acquisition of the difference accumulation information and fills it into the first overhead area. This avoids a situation where the acquisition or collection frequency of difference accumulation information is too slow, which may result in the second frame (or the first frame) not including the collected difference accumulation information.

The sampling frequency of the PD may also be referred to as the measurement frequency, detection frequency of the PD, etc. The sampling frequency of the PD is less than or equal to a sending frequency of the second frame; that is, the measurement period (detection period or sampling period) of the PD is greater than or equal to the sending period of the second frame. The sending frequency of the second frame may also be referred to as the frequency (or sending frequency) of the accumulated differential overhead or difference accumulation information of the second frame.

In some optional embodiments of the present disclosure, the first frame further includes a second overhead area, the second overhead area is used to fill with or place a first check code determined based on difference accumulation information; the method further includes: determining, by the second device, the first check code based on the difference accumulation information, and filling or placing, by the second device, the first check code in the second overhead area.

In some optional embodiments, in the case that the second device receives a second frame sent by another second device, the method further includes: performing, by the second device, verification based on the first check code filled or placed in the second overhead area.

In this embodiment, the first check code can specifically be CRC information, such as a CRC check code. The sending-end device, which fills difference accumulation information (or multiple identical pieces of difference accumulation information), can calculate first check information (such as a first check code) based on the difference accumulation information (or multiple identical pieces of difference accumulation information). The first check information is then placed or filled into the second overhead area of the first frame, and the second frame is sent. After receiving the second frame sent by another device, the receiving-end device can perform verification based on the second overhead area of the first frame. Specifically, it can calculate the second check information (such as a second check code) based on the difference accumulation information (or multiple identical pieces of difference accumulation information) placed in the first overhead area of the first frame. By comparing the calculated second check information with the first check information in the second overhead area, it can determine whether the second frame is received correctly according to the comparison result, thereby enabling error correction.

In this embodiment, the second overhead area and the first overhead area may be the same, may overlap, or may be independent of each other.

In some optional embodiments, the second overhead area included in the first frame is used to fill with or place the first check code determined based on the difference accumulation information. Specifically, the second overhead area of the (i+2)$^{th}$ first frame is used to fill with or place the first check code determined based on the difference accumulation information for the i$^{th}$ first frame. That is, the second overhead area of the (i+2)$^{th}$ first frame includes the first check information of the i$^{th}$ first frame. For example, the second device calculates the first check code based on the difference accumulation information of the i$^{th}$ first frame. Due to a potential delay or according to a predefined processing rule, the second device may fill with or place the obtained first check code into the second overhead area of the (i+2)$^{th}$ first frame. Correspondingly, when performing verification based on the first check code, the second device can calculate the second check code based on the difference accumulation information placed or filled in the first overhead area of the i$^{th}$ first frame, and then obtain the first check code from the second overhead area of the (i+2)$^{th}$ first frame. By comparing the calculated second check code with the first check code, it can determine whether the second frame is received correctly according to the comparison result, thereby enabling error correction.

The embodiments of the present disclosure further provide a transmission method. FIG. 4 is yet another schematic flowchart of the transmission method according to an embodiment of the present disclosure. As shown in FIG. 4, the method includes:

step 301: receiving, by the third device, a second frame sent by a second device, and demapping or demultiplexing, by the third device, the second frame into a first frame; wherein the first frame includes a first overhead area, the first overhead area includes placed or filled difference accumulation information, the first overhead area includes multiple identical pieces of difference accumulation information;

step 302: obtaining clock information or frequency information of the first frame based on the difference accumulation information.

In this embodiment, the third device is the destination node, that is, the last node in the transmission process. It may also be referred to as the sink node, sink device, destination device, receiving device, receiving-end device, etc.

In some optional embodiments, the third device receives a second frame, wherein the received message may only include the second frame, or may include the second frame, and may include other information in addition to the second frame. For example, the received message is an OTU frame, in which the OTU frame includes an ODU frame, the ODU frame includes an OPU frame, and the OPU frame includes an fgODU frame.

Optionally, the second frame includes a first parameter but does not include a second parameter, wherein the first parameter represents an m-bit client data count; and the second parameter represents a difference between an n-bit client data count and $\frac{m}{n} \times C_m$ . The third device demaps or demultiplexes the second frame into the first frame using the first parameter.

In this embodiment, the third device receives the second frame from the second device. On one hand, it recovers the data of the first frame based on the first parameter carried in the second frame. Specifically, it employs the demapping or demultiplexing processing described in the embodiments of the present disclosure to recover the data of the first frame based on the first parameter. Optionally, the above demultiplexing or demapping may also be referred to as demultiplexing, demultiplexing and demapping, demultiplexed mapping, DMUX, demapping and Demultiplexing, etc.

In this embodiment, the first frame includes a first overhead area, which places or fills difference accumulation information. The difference accumulation information represents an accumulated difference of a specified parameter during a process in which a second frame is sent by the first device and arrives at a current device. The specified parameter is phase and/or frequency, and the difference accumulation information includes an accumulated phase difference and/or an accumulated frequency difference. The difference accumulation information is information specific to the specified parameter, for example, including: accumulated phase information, accumulated frequency information, accumulated phase difference information, accumulated frequency difference information, difference accumulation, difference accumulation (DIFF_ACC) phase measurement, difference accumulation (DIFF _ACC) phase measurements of the reference clock at the source node of the fgODU signal as accumulated through all the intermediate switching nodes to the sink node, etc. The accumulated differential information described in this embodiment may be freely replaced based on any of the above names.

In this embodiment, the first overhead area is capable of placing or filling the identical difference accumulation information. That is, the first overhead area includes multiple positions (e.g., bytes) for placing or filling the identical difference accumulation information. In other words, the identical difference accumulation information is transmitted multiple times through the first frame (or the mapped/multiplexed second frame) to improve the reliability of data transmission. The receiving-end device can also perform a majority decision (which may also be referred to as a majority voting) based on the identical difference accumulation information transmitted multiple times to correct errors and obtain a correct piece of difference accumulation information.

In some optional embodiments, each piece of difference accumulation information occupies one byte in the first overhead area.

In some optional embodiments, multiple identical pieces of difference accumulation information may be placed or filled in different rows of the first overhead area.

In some optional embodiments, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments, each row of the first overhead area is used to fill with or place a first portion of the difference accumulation information, and the first portion of the difference accumulation information is used to fill with or place difference accumulation information of a current moment; and/or each row of the first overhead area is used to fill with or place another portion of the difference accumulation information other than the first portion, and the other portion of the difference accumulation information is used to fill with or place difference accumulation information of a past moment.

In this embodiment, the current moment and the past moment refer to the device that obtains the difference accumulation information (such as the second device). In other words, the difference accumulation information of a current moment refers to the most recently or newly obtained information by the device, which is actually the difference accumulation information to be transmitted at the current moment. The past moment is relative to the current moment; the difference accumulation information of the past moment refers to historical difference accumulation information, or difference accumulation information obtained at a moment before the current moment, which is actually difference accumulation information that has already transmitted at the past moment. The first overhead area is at least used to fill with or place the currently obtained difference accumulation information, and can also be used to fill with or place the previously obtained difference accumulation information. For example, the first difference accumulation information is obtained at time n, the second difference accumulation information is obtained at time n+1, and the third difference accumulation information is obtained at time n+2. Time n+2 is the current moment, that is, the most recently obtained difference accumulation information. Referring to the example in FIG. 2, in the first frame, from the $1913^{th}$ byte column to the $1915^{th}$ byte column, the byte corresponding to the $1913^{th}$ byte column in the first row is filled or placed the third difference accumulation information, the byte corresponding to the $1914^{th}$ byte column in the first row is filled or placed the second difference accumulation information, and the byte corresponding to the $1915^{th}$ byte column in the first row is filled or placed the first difference accumulation information.

In some optional embodiments, each row of the first overhead area is used to fill with or place a first portion of the difference accumulation information, with the same column(s).

In this embodiment, the description of the first overhead area of the first frame can refer to the specific description in the above-mentioned embodiments related to the first device, and will not be repeated here. After the second device collects, determines or obtains difference accumulation information (such as the first phase difference and/or the first frequency difference), it places or fills the collected, determined, or obtained difference accumulation information into the corresponding position according to the specific description of the first overhead area provided in the above embodiment. That is, the specified position in the first overhead area of the first frame in the second frame received by the third device has been placed or filled difference accumulation information.

In some optional embodiments of the present disclosure, the method further includes: performing, by the third device, a majority decision or a majority voting based on multiple identical pieces of difference accumulation information in the first overhead area to obtain a correct piece of difference accumulation information.

In this embodiment, the first overhead area of the first frame includes multiple positions (e.g., bytes) for placing or filling the identical difference accumulation information. That is, the identical difference accumulation information is transmitted multiple times through the first frame. For example, the identical difference accumulation information or the same accumulated information is transmitted through each of the three rows of the first frame, with each row transmitting the difference accumulation information once. The third device can obtain multiple difference accumulation information from the multiple portions (e.g., bytes) in the first overhead area for placing or filling the identical difference accumulation information. For example, it can obtain one piece of difference accumulation information at a first specified position in the first row of the first frame, one at a second specified position in the second row, and one at a third specified position in the third row. Then, it determines whether the difference accumulation information filled or placed by the multiple portions or bytes is the same, thereby performing a majority decision (which may also be referred to as a majority voting) to correct errors and obtain a correct piece of difference accumulation information. For example, if certain bytes are supposed to transmit the identical difference accumulation information, but after checking it is found that the difference accumulation information placed or filled in these bytes is different-for example, the identical difference accumulation information is transmitted 3 times, but two out of three are identical-then the two identical difference accumulation information can be determined as a correct piece of difference accumulation information.

In some optional embodiments of the present disclosure, the first frame further includes a second overhead area, the second overhead area is used to fill with or place a first check code determined based on the difference accumulation information; the method further includes: performing, by the third device, verification based on the first check code filled or placed in the second overhead area.

In this embodiment, the first check code can specifically be CRC information, such as a CRC check code. The sending-end device, which fills multiple identical pieces of difference accumulation information, can calculate first check information (such as a first check code) based on multiple identical pieces of difference accumulation information. The first check information is then placed or filled into the second overhead area of the first frame, and the second frame is sent. After receiving the second frame from another device, the receiving-end device can perform verification based on the second overhead area of the first frame. Specifically, it can calculate second check information (such as a second check code) based on the multiple identical pieces of difference accumulation information placed in the first overhead area of the first frame. By comparing the calculated second check information with the first check information in the second overhead area, it can determine whether the second frame is received correctly according to the comparison result, thereby enabling error correction.

In this embodiment, the second overhead area and the first overhead area may be the same, may overlap, or may be independent of each other.

In some optional embodiments, the second overhead area included in the first frame is used to fill with or place the first check code determined based on the difference accumulation information. Specifically, the second overhead area of the $(i+2)^{th}$ first frame can be used to fill with or place the first check code determined based on the difference accumulation information for the $i^{th}$ first frame. That is, the second overhead area of the $(i+2)^{th}$ first frame includes the first check information of the $i^{th}$ first frame. For example, when the third device performs verification based on the first check code, it can calculate the second check code based on the difference accumulation information placed or filled in the first overhead area of the $i^{th}$ first frame, then obtain the first check code from the second overhead area of the $(i+2)^{th}$ first frame. By comparing the calculated second check code with the first check code, it can determine whether the second frame is received correctly according to the comparison result, thereby enabling error correction.

FIG. 5 a transmission schematic diagram of the transmission method according to an embodiment of the present disclosure. As shown in FIG. 5, for illustration purposes, the number of intermediate nodes is set to 2 in this example. In practical applications, the number of intermediate nodes is not limited to two, and this embodiment does not impose such a limitation. Referring to FIG. 5, the data transmission process may include:

at the source node, service data is mapped to the OSU using traditional GMP, which includes both Cm and CnD. The OSU is mapped to the ODU using a special mapping method according to an embodiment of the present disclosure, which only includes the Cm (excluding CnD). The source node sends the second frame to an intermediate node 1.

Herein, the OSU corresponds to the first frame in the above embodiment, and ODU corresponds to the second frame in the above embodiment.

In this example, the first overhead area of the OSU is used to fill with or place difference accumulation information, such as accumulated phase difference or accumulated frequency difference. Furthermore, the first overhead area is capable of placing or filling multiple identical pieces of difference accumulation information, and the multiple identical pieces of difference accumulation information may be placed or filled in specified positions in different rows of the first overhead area.

In some optional examples, each row of the first overhead area is used to fill with or place a first portion of the difference accumulation information, and the first portion of the difference accumulation information is used to fill with or place difference accumulation information of a current moment; and/or each row of the first overhead area is used to fill with or place another portion of the difference accumulation information other than the first portion, and the other portion of the difference accumulation information is used to fill with or place difference accumulation information of a past moment.

At the intermediate node 1, a Phase Detector (PD) can be used to compare the phase of the input signal (i.e., the phase of the received ODU, for example, denoted as phase input) with the phase of the local clock (the local clock and the output signal share the same clock domain, frequency, and phase synchronization; the phase of the local clock is denoted as phase output). The phase difference is calculated as phase offset 1 = phase output - phase input, and the accumulated phase difference is calculated as phase offset path = 0 + phase offset 1. The received ODU is demapped or demultiplexed (DMUX)/buffered to obtain an OSU. The accumulated phase difference (phase offset path) is then placed in the OSU frame header overhead. Furthermore, the OSU undergoes crossing processing to obtain a processed OSU, which is then multiplexed (MUX) to obtain the ODU, and the processed ODU is sent out.

For example, as shown in FIG. 2, the OSU has a structure of 4 rows and 3824 columns. The 1913 byte column in the first row can be used to fill with or place a difference accumulation information, the 1914 byte column in the second row is used to fill with or place the difference accumulation information, and the 1915 byte column in the third row is also used to fill with or place the difference accumulation information.

For example, the first difference accumulation information is obtained at time n, the second difference accumulation information is obtained at time n+1, and the third difference accumulation information is obtained at time n+2. Time n+2 is the current moment, that is, the most recently obtained difference accumulation information. Referring to the example in FIG. 2, in the first frame, from the 1913$^{th}$ byte column to the 1915$^{th}$ byte column, the byte corresponding to the 1913$^{th}$ byte column in the first row is filled or placed the third difference accumulation information, the byte corresponding to the 1914$^{th}$ byte column in the first row is filled or placed the second difference accumulation information, and the byte corresponding to the 1915$^{th}$ byte column in the first row is filled or placed the first difference accumulation information.

At an intermediate node 2, a PD can be used to compare the phase of the input signal (i.e., the phase of the received ODU, for example, denoted as phase input) with the phase of the local clock (the local clock and the output signal share the same clock domain, frequency, and phase synchronization; the phase of the local clock is denoted as phase output). The phase difference is calculated as phase offset 2 = phase output - phase input, and the accumulated phase difference is calculated as phase offset path = phase offset 1 + phase offset 2. The received ODU is demapped or demultiplexed (DMUX)/-buffered to obtain the OSU. The accumulated phase difference (phase offset path) is then placed in the OSU frame header overhead. Furthermore, the OSU undergoes crossing processing to obtain the processed OSU, which is then multiplexed (MUX) to obtain the ODU, and the processed ODU is sent.

Similar processing is performed for each intermediate node, and the accumulated phase difference is calculated as: phase offset path = phase offset 1 + phase offset 2 +... + phase offset N.

At the sink node (or destination node), the ODU sent by the intermediate node is received. Using the accumulated phase difference (phase offset path) and Cm carried in the ODU, special demapping or demultiplexing processing is performed. The OSU data is recovered from Cm, and the OSU clock frequency is recovered using a Phase Locked Loop (PLL) through the phase offset path, thus restoring or recovering the OSU frequency information (or clock information) and OSU frame. Furthermore, through conventional GMP demapping processing, the OSU is demapped into service data.

In the above process, the accumulated frequency difference may also be obtained by differentiating the accumulated phase difference, and it is then placed or filled into the OSU frame header overhead. Alternatively, the frequency difference may be calculated by using a Phase Detector (PD) to compare the frequency of the input signal (i.e., the frequency of the received ODU) with the frequency of the local clock (the local clock and the output signal share the same clock domain, frequency, and phase synchronization). The accumulated frequency difference is then calculated and placed or filled into the OSU frame header overhead.

As can be seen from the above examples, during the data frame transmission process, on the one hand, only Cm needs to be carried, without carrying CnD, and the receiving end can achieve data recovery. On the other hand, various intermediate nodes can recover the clock information or frequency information of the OSU by carrying the accumulated phase difference and/or accumulated frequency difference, without the need to recover the frequency information of the data frame through a low-pass phase-locked loop, thereby reducing hardware consumption.

Based on the above embodiments, the present disclosure further provides a transmission apparatus, which is applied in a first device. FIG. 6 is a schematic structural diagram of a transmission apparatus according to an embodiment of the present disclosure. The apparatus includes: a first processing unit 11, configured to map service data into a first frame, wherein the first frame includes a first overhead area, the first overhead area is used to fill with or place difference accumulation information, and the first overhead area is capable of placing or filling multiple identical pieces of difference accumulation information.

In some optional embodiments of the present disclosure, each piece of difference accumulation information occupies one byte in the first overhead area.

In some optional embodiments of the present disclosure, multiple identical pieces of difference accumulation information may be placed or filled in different rows of the first overhead area.

In some optional embodiments of the present disclosure, each row of the first overhead area is used to fill with or place a first portion of the difference accumulation information, and the first portion of the difference accumulation information is used to fill with or place difference accumulation information of a current moment; and/or

each row of the first overhead area is used to fill with or place another portion of the difference accumulation information other than the first portion, and the other portion of the difference accumulation information is used to fill with or place difference accumulation information of a past moment.

In some optional embodiments of the present disclosure, each row of the first overhead area is used to fill with or place a first portion of the difference accumulation information, with the same column(s).

In some optional embodiments of the present disclosure, the first frame further includes a second overhead area, the second overhead area is used to fill with or place a first check code determined based on the difference accumulation information.

In some optional embodiments of the present disclosure, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments of the present disclosure, the apparatus further includes a first communication unit 12;

the first processing unit 11 is further configured to multiplex or map the first frame into the second frame;

the first communication unit 12 is configured to send the second frame.

In some optional embodiments of the present disclosure, the difference accumulation information represents an accumulated difference of a specified parameter during a process in which a second frame is sent by the first device and arrives at a current device; and/or, the difference accumulation information includes an accumulated phase difference and/or an accumulated frequency difference.

In the embodiments of the present disclosure, the first processing unit 11 in the apparatus may be implemented by a Central Processing Unit (CPU), Digital Signal Processor (DSP), Microcontroller Unit (MCU), or Field-Programmable Gate Array (FPGA) in practical applications; the first communication unit 12 in the apparatus may be implemented through a communication module (including: a basic communication suite, an operating system, a communication module, standardized interfaces and protocols, etc.) and transceiver antenna in practical applications.

The embodiments of the present disclosure further provide a transmission apparatus, which is applied in a second device. FIG. 7 is another schematic structural diagram of a transmission apparatus according to an embodiment of the present disclosure. The apparatus includes: a second communication unit 21, configured to receive a second frame; wherein the second frame includes a first frame, the first frame includes a first overhead area, the first overhead area is used to fill with or place difference accumulation information, the first overhead area is capable of placing or filling multiple identical pieces of difference accumulation information.

In some optional embodiments of the present disclosure, the difference accumulation information represents the accumulated difference of a specified parameter during the process in which the second frame is sent by the first device and arrives at the current device; and/or, the difference accumulation information includes the accumulated phase difference and/or the accumulated frequency difference.

In some optional embodiments of the present disclosure, the apparatus further includes a second processing unit 22, configured to demultiplex or demap the second frame into a first frame; determine a first phase difference and/or a first frequency difference of the second frame after passing through each of the second devices, wherein the first phase difference includes a phase difference of the second frame after passing through the second device, or includes an accumulated phase difference of the second frame after passing through the second device and another second device; the first frequency difference includes a frequency difference of the second frame after passing through the second device, or includes an accumulated frequency difference of the second frame after passing through the second device and another second device; fill with or place the first phase difference and/or the first frequency difference into the first overhead area of the first frame; and map or multiplex the first frame into the second frame.

In some optional embodiments of the present disclosure, each piece of difference accumulation information occupies one byte in the first overhead area.

In some optional embodiments of the present disclosure, multiple identical pieces of difference accumulation information may be placed or filled in different rows of the first overhead area.

In some optional embodiments of the present disclosure, each row of the first overhead area is used to fill with or place a first portion of the difference accumulation information, and the first portion of the difference accumulation information is used to fill with or place difference accumulation information of a current moment; and/or

each row of the first overhead area is used to fill with or place another portion of the difference accumulation information other than the first portion, and the other portion of the difference accumulation information is used to fill with or place difference accumulation information of a past moment.

In some optional embodiments of the present disclosure, each row of the first overhead area is used to fill with or place a first portion of the difference accumulation information, with the same column(s).

In some optional embodiments of the present disclosure, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments of the present disclosure, the apparatus further includes a second processing unit 22 configured to perform a majority decision or a majority voting based on multiple identical pieces of difference accumulation information in the first overhead area to obtain a correct piece of difference accumulation information.

In some optional embodiments of the present disclosure, the second communication unit 21 is further configured to send the processed second frame.

In some optional embodiments of the present disclosure, a frequency at which the difference accumulation information is obtained or calculated, or a sampling frequency of a phase detector in the second device, is less than or equal to a sending frequency of the second frame.

In some optional embodiments of the present disclosure, the second communication unit 21 is configured to receive the second frame sent by the first device; or, to receive the second frame sent by another second device, the second frame originating from the first device, the second frame including a third phase difference or a third frequency difference, the third phase difference representing an accumulated phase difference of the second frame after passing through another second device, and the third frequency difference representing an accumulated frequency difference of the second frame after passing through the other second device.

In some optional embodiments of the present disclosure, the second processing unit 22 is configured to obtain a second phase difference between a first phase and a second phase, wherein the first phase represents the phase of the received second frame, and the second phase represents the phase of the local clock of the second device or the phase of the second frame to be sent; and determine the second phase difference as the first phase difference; or, obtain a second phase difference between a first phase and a second phase, wherein the first phase represents the phase of the received second frame, and the second phase represents the phase of the local clock of the second device or the phase of the second frame to be sent; and determine the first phase difference based on the second phase difference and the third phase difference.

In some optional embodiments of the present disclosure, the second processing unit 22 is configured to obtain a second frequency difference between a first frequency and a second frequency, wherein the first frequency represents the frequency of the received second frame, and the second frequency represents the frequency of the local clock of the second device or the frequency of the second frame to be sent; and determine the second frequency difference as the first frequency difference; or, obtain a second frequency difference between a first frequency and a second frequency, wherein the first frequency represents the frequency of the received second frame, and the second frequency represents the frequency of the local clock of the second device or the frequency of the second frame to be sent; and determine the first frequency difference based on the second frequency difference and the third frequency difference.

In some optional embodiments of the present disclosure, the first frame further includes a second overhead area, the second overhead area is used to fill with or place a first check code determined based on difference accumulation information;

the second processing unit 22 is further configured to determine the first check code based on difference accumulation information, and to fill or place the first check code in the second overhead area.

In some optional embodiments of the present disclosure, when the second communication unit 21 receives a second frame sent by another second device, the second processing unit 22 is further configured to perform verification based on the first check code filled or placed in the second overhead area.

In the embodiments of the present disclosure, the second processing unit 22 in the apparatus may be implemented by a CPU, DSP, MCU or FPGA in practical applications; the second communication unit 21 in the apparatus may be implemented through a communication module (including a basic communication suite, an operating system, a communication module, standardized interfaces and protocols, etc.) and a transceiver antenna in practical applications.

The embodiments of the present disclosure further provide a transmission apparatus, which is applied in a third device. FIG. 8 is yet another schematic structural diagram of a transmission apparatus according to an embodiment of the present disclosure. As shown in FIG. 8, the apparatus includes: a third communication unit 31 and a third processing unit 32; wherein

the third communication unit 31 is configured to receive a second frame sent by a second device;

the third processing unit 32 is configured to demap or demultiplex the second frame into a first frame; wherein the first frame includes a first overhead area, the first overhead area includes placed or filled difference accumulation information, the first overhead area includes multiple identical pieces of difference accumulation information; and the third processing unit is further configured to obtain clock information or frequency information of the first frame based on the difference accumulation information.

In some optional embodiments of the present disclosure, the difference accumulation information represents the accumulated difference of a specified parameter during a process in which the second frame is sent by the first device and arrives at the current device; and/or, the difference accumulation information includes an accumulated phase difference and/or an accumulated frequency difference.

In some optional embodiments of the present disclosure, each piece of difference accumulation information occupies one byte in the first overhead area.

In some optional embodiments of the present disclosure, multiple identical pieces of difference accumulation information are placed or filled in different rows of the first overhead area.

In some optional embodiments of the present disclosure, each row of the first overhead area is used to fill with or place a first portion of the difference accumulation information, and the first portion of the difference accumulation information is used to fill with or place difference accumulation information of a current moment; and/or each row of the first overhead area is used to fill with or place another portion of the difference accumulation information other than the first portion, and the other portion of the difference accumulation information is used to fill with or place difference accumulation information of a past moment.

In some optional embodiments of the present disclosure, each row of the first overhead area is used to fill with or place a first portion of the difference accumulation information, with the same column(s).

In some optional embodiments of the present disclosure, three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or

three identical pieces of difference accumulation information are placed or filled in a fourth row of the first overhead area, a first row of a first overhead area of a next frame and a second row of the first overhead area of the next frame, respectively.

In some optional embodiments of the present disclosure, the third processing unit 32 is further configured to perform a majority decision or a majority voting based on multiple identical pieces of difference accumulation information in the first overhead area to obtain correct difference accumulation information.

In some optional embodiments of the present disclosure, the first frame further includes a second overhead area, the second overhead area is used to fill with or place a first check code determined based on multiple identical pieces of difference accumulation information; the third processing unit 32 is further configured to perform verification based on the first check code filled or placed in the second overhead area.

In the embodiments of the present disclosure, the third processing unit 32 in the apparatus may be implemented by a CPU, DSP, MCU or FPGA in practical applications; the third communication unit 31 in the apparatus may be implemented through a communication module (including a basic communication suite, an operating system, a communication module, standardized interfaces and protocols, etc.) and a transceiver antenna in practical applications.

It should be noted that when the transmission apparatus provided in the above embodiments performs transmission, the division of the aforementioned program modules is merely for illustrative purposes. In actual applications, the above processing can be assigned to different program modules as needed, that is, an internal structure of the apparatus may be divided into different program modules to complete all or part of the processing described above. In addition, the transmission apparatus and the transmission method provided in the above embodiments are based on the same inventive concept, and the specific implementation process can be found in the method embodiments, which will not be repeated here.

An embodiment of the present disclosure further provides an optical communication device, which may be the first device, second device, or third device described in the foregoing embodiments. FIG. 9 is a schematic diagram of a hardware structure of an optical communication device according to an embodiment of the present disclosure. As shown in FIG. 9, the optical communication device includes a memory 42, a processor 41, and a computer program stored in the memory 42 and executable by the processor 41. The processor 41 is configured to execute the program to implement the steps of the transmission method applied to the first device, second device, or third device.

Optionally, the optical communication device further includes at least one network interface 43. The various components in the optical communication device are coupled together via a bus system 44. It can be understood that the bus system 44 is used to enable connection and communication between these components. In addition to a data bus, the bus system 44 further includes a power bus, a control bus, and a status signal bus. However, for clarity, all buses are labeled as bus system 44 in FIG. 9.

It can be understood that the memory 42 may be a volatile memory or a non-volatile memory, or may include both. The non-volatile memory may be a Read-Only Memory (ROM), Programmable Read-Only Memory (PROM), Erasable Programmable Read-Only Memory (EPROM), Electrically Erasable Programmable Read-Only Memory (EEPROM), Ferromagnetic Random Access Memory (FRAM), flash memory, magnetic surface memory, optical disc, or Compact Disc Read-Only Memory (CD-ROM). The magnetic surface memory may be disk storage or tape storage. The volatile memory may be Random Access Memory (RAM), which serves as an external high-speed cache. By way of example, but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Rambus Random Access Memory (DRRAM). The memory 42 described in embodiments of the present disclosure is intended to include, but is not limited to, these and any other suitable types of memory.

The methods disclosed in the above embodiments of the present disclosure can be applied to or implemented by a processor 41. The processor 41 may be an integrated circuit chip with signal processing capabilities. In implementations, each step of the above method may be completed by the integrated logic circuit of the hardware in processor 41 or by instructions in the form of software. The processor 41 may be a general-purpose processor, a DSP, or other programmable logic devices, discrete gates or transistor logic devices, discrete hardware components, etc. The processor 41 may implement or execute the methods, steps, and logic block diagrams disclosed in the embodiments of the present disclosure. The general-purpose processor may be a microprocessor or any conventional processor, etc. The steps of the methods disclosed in the embodiments of the present disclosure may be directly executed by a hardware decoding processor, or by a combination of hardware and software modules within the decoding processor. The software modules may be located in a storage medium, which is located in a memory 42. The processor 41 reads the information from the memory 42 and, in conjunction with its hardware, completes the steps of the aforementioned method.

In an exemplary embodiment, the optical communication device may be implemented by one or more Application-Specific Integrated Circuits (ASICs), DSPs, Programmable Logic Devices (PLDs), Complex Programmable Logic Devices (CPLDs), FPGAs, general-purpose processors, controllers, MCUs, microprocessors, or other electronic components to perform the aforementioned method.

In an exemplary embodiment, an embodiment of the present disclosure further provides a computer-readable storage medium, such as a memory 42 including a computer program, which can be executed by a processor 41 of an optical communication device to perform the steps described in the foregoing method. The computer-readable storage medium may be a memory such as FRAM, ROM, PROM, EPROM, EEPROM, Flash Memory, magnetic surface memory, optical disc, or CD-ROM; or may be various devices including one or any combination of the above-mentioned memories.

The computer-readable storage medium provided in the embodiments of the present disclosure has a computer program stored thereon, wherein the computer program is used to be executed by a processor to implement the steps of the transmission method applied to a first device, a second device, or a third device.

The methods disclosed in the method embodiments provided in the present disclosure may be arbitrarily combined without conflict to obtain new method embodiments.

The features disclosed in the product embodiments provided in the present disclosure may be arbitrarily combined without conflict to obtain new product embodiments.

The features disclosed in the method or device embodiments provided in the present disclosure may be arbitrarily combined without conflict to obtain new method or device embodiments.

In the embodiments provided in the present disclosure, it should be understood that the disclosed devices and methods can be implemented in other ways. The device embodiments described above are merely illustrative. For example, the division of units is only a logical functional division, and in actual implementation, there may be other division methods. For instance, multiple units or components may be combined, or integrated into another system, or some features may be omitted or not implemented. In addition, the coupling, direct coupling, or communication connection between the various components shown or discussed may be implemented through some interfaces, and the indirect coupling or communication connection between devices or units may be electrical, mechanical, or other forms.

The units described above as separate components may or may not be physically separate. The components shown as units may or may not be physical units, that is, they may be located in one place or distributed across multiple network units. Some or all of the units may be selected to achieve the purpose of this embodiment according to actual needs.

In addition, the various functional units in the various embodiments of the present disclosure can be integrated into one processing unit, or each unit may exist independently as a separate unit, or two or more units may be integrated into one unit. The above integrated units can be implemented in the form of hardware or software functional units.

Those of ordinary skill in the art may appreciate that all or part of the steps of the above method embodiments can be implemented by hardware related to program instructions. The aforementioned program can be stored in a computer-readable storage medium. When the program is executed, the program performs the steps of the above method embodiments. The aforementioned storage medium includes various media that may store program code, such as removable storage devices, ROM, RAM, magnetic disks, or optical discs.

Alternatively, if the integrated unit of the present disclosure is implemented in the form of a software functional unit and sold or used as an independent product, it may be stored in a computer-readable storage medium. Based on such an understanding, the technical solution of the embodiments of the present disclosure, in essence, or the part contributing to the prior art, may be implemented in a form of a software product. The computer software product is stored in a storage medium, and includes instructions to cause a computer device (which may be a personal computer, a server, or a network device, etc.) or a processor to execute all or part of the methods described in various embodiments of the present disclosure. The aforementioned storage media include: removable storage devices, ROM, RAM, magnetic disks, optical discs, and other media that can store program code.

The above are merely specific embodiments of the present disclosure, but the protection scope of the present disclosure is not limited thereto. Any variations or substitutions easily conceived by those skilled in the art within the technical scope disclosed by the present disclosure should fall within the protection scope of present disclosure. Therefore, the protection scope of the present disclosure should be determined by the scope of the claims.

## Claims

1. A transmission method, applied to a first device, comprising:
   mapping, by the first device, service data into a first frame; the first frame comprises a first overhead area, wherein the first overhead area is used to fill with or place difference accumulation information, and the first overhead area is capable of placing or filling multiple identical pieces of difference accumulation information.

2. The method according to claim 1, wherein each piece of difference accumulation information occupies one byte in the first overhead area.

3. The method according to claim 1, wherein the multiple identical pieces of difference accumulation information may be placed or filled in different rows of the first overhead area.

4. The method according to claim 1, wherein each row of the first overhead area is used to fill with or place a first portion of the difference accumulation information, and the first portion of the difference accumulation information is used to fill with or place difference accumulation information of a current moment; and/or
   each row of the first overhead area is used to fill with or place another portion of the difference accumulation information other than the first portion, and the other portion of the difference accumulation information is used to fill with or place difference accumulation information of a past moment.

5. The method according to claim 1, wherein each row of the first overhead area is used to fill with or place a first portion of the difference accumulation information, with the same column(s).

6. The method according to claim 1, wherein the first frame further comprises a second overhead area, the second overhead area is used to fill with or place a first check code determined based on the difference accumulation information.

7. The method according to claim 1, wherein three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

   three identical pieces of difference accumulation information are placed or filled in a third row of the first overhead area, a fourth row of the first overhead area and a first row of a first overhead area of a next frame, respectively; or
   three identical pieces of difference accumulation information are placed or filled in a fourth row of the first overhead area, a first row of a first overhead area of a next frame and a second row of the first overhead area of the next frame, respectively.

8. The method according to claim 1, further comprising: multiplexing or mapping the first frame into a second frame, and sending the second frame.

9. The method according to any one of claims 1 to 8, wherein the difference accumulation information represents an accumulated difference of a specified parameter during a process in which a second frame is sent by the first device and arrives at a current device; and/or
   the difference accumulation information comprises an accumulated phase difference and/or an accumulated frequency difference.

10. A transmission method, applied to a second device, comprising:
    receiving, by the second device, a second frame, wherein the second frame comprises a first frame, the first frame comprises a first overhead area, the first overhead area is used to fill with or place difference accumulation information, the first overhead area is capable of placing or filling multiple identical pieces of difference accumulation information.

**11.** The method according to claim 10, wherein the difference accumulation information represents an accumulated difference of a specified parameter during a process in which the second frame is sent by a first device and arrives at a current device; and/or
the difference accumulation information comprises an accumulated phase difference and/or an accumulated frequency difference.

**12.** The method according to claim 10 or 11, further comprising:

demultiplexing or demapping the second frame into the first frame;
determining a first phase difference and/or a first frequency difference of the second frame after passing through each of the second devices, wherein the first phase difference comprises a phase difference of the second frame after passing through the second device, or comprises an accumulated phase difference of the second frame after passing through the second device and another second device; the first frequency difference comprises a frequency difference of the second frame after passing through the second device, or comprises an accumulated frequency difference of the second frame after passing through the second device and another second device;
placing or filling the first phase difference and/or the first frequency difference into the first overhead area of the first frame;
mapping or multiplexing the first frame into the second frame.

**13.** The method according to claim 10, wherein each piece of difference accumulation information occupies one byte in the first overhead area.

**14.** The method according to claim 10, wherein multiple identical pieces of difference accumulation information are placed or filled in different rows of the first overhead area.

**15.** The method according to claim 10, wherein each row of the first overhead area is used to fill with or place a first portion of the difference accumulation information, and the first portion of the difference accumulation information is used to fill with or place difference accumulation information of a current moment; and/or
each row of the first overhead area is used to fill with or place another portion of the difference accumulation information other than the first portion, and the other portion of the difference accumulation information is used to fill with or place difference accumulation information of a past moment.

**16.** The method according to claim 10, wherein each row of the first overhead area is used to fill with or place a first portion of the difference accumulation information, with the same column(s).

**17.** The method according to claim 10, wherein three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or
three identical pieces of difference accumulation information are placed or filled in a fourth row of the first overhead area, a first row of a first overhead area of a next frame and a second row of the first overhead area of the next frame, respectively.

**18.** The method according to claim 10, further comprising:
performing, by the second device, a majority decision or a majority voting based on multiple identical pieces of difference accumulation information in the first overhead area to obtain a correct piece of difference accumulation information.

**19.** The method according to claim 12, further comprising:
sending a processed second frame.

**20.** The method according to claim 10, wherein a frequency at which the difference accumulation information is obtained or calculated, or a sampling frequency of a phase detector in the second device, is less than or equal to a sending frequency of the second frame.

**21.** The method according to claim 12, wherein the second device receiving the second frame comprises:

the second device receiving the second frame sent by a first device; or
the second device receiving the second frame sent by another second device, the second frame originating from the first device, the second frame comprising a third phase difference or a third frequency difference, the third phase difference representing an accumulated phase difference of the second frame after passing through another second device, and the third frequency difference representing an accumulated frequency difference of the second frame after passing through the other second device.

**22.** The method according to claim 21, wherein the determining the first phase difference of the second frame after passing through each of the second devices comprises:

obtaining a second phase difference between a first phase and a second phase, wherein the first phase represents a phase of the received second frame, and the second phase represents a phase of a local clock of the second device or a phase of the second frame to be sent; and determining the second phase difference as the first phase difference; or

obtaining a second phase difference between a first phase and a second phase, wherein the first phase represents a phase of the received second frame, and the second phase represents a phase of a local clock of the second device or a phase of the second frame to be sent; and determining the first phase difference based on the second phase difference and the third phase difference.

**23.** The method according to claim 21, wherein the determining the first frequency difference of the second frame after passing through each of the second devices comprises:

obtaining a second frequency difference between a first frequency and a second frequency, wherein the first frequency represents a frequency of the received second frame, and the second frequency represents a frequency of a local clock of the second device or a frequency of the second frame to be sent; and determining the second frequency difference as the first frequency difference; or

obtaining a second frequency difference between a first frequency and a second frequency, wherein the first frequency represents a frequency of the received second frame, and the second frequency represents a frequency of a local clock of the second device or a frequency of the second frame to be sent; and determining the first frequency difference based on the second frequency difference and the third frequency difference.

**24.** The method according to claim 12, wherein the first frame further comprises a second overhead area, the second overhead area is used to fill with or place a first check code determined based on difference accumulation information;

the method further comprises: determining, by the second device, the first check code based on the difference accumulation information, and filling or placing, by the second device, the first check code in the second overhead area.

**25.** The method according to claim 24, wherein in the case that the second device receives a second frame sent by another second device, the method further comprises:

performing, by the second device, verification based on the first check code filled or placed in the second overhead area.

**26.** A transmission method, applied to a third device, comprising:

receiving, by the third device, a second frame sent by a second device, and demapping or demultiplexing, by the third device, the second frame into a first frame; wherein the first frame comprises a first overhead area, the first overhead area comprises placed or filled difference accumulation information, the first overhead area comprises multiple identical pieces of difference accumulation information.

obtaining clock information or frequency information of the first frame based on the difference accumulation information.

**27.** The method according to claim 26, wherein each piece of difference accumulation information occupies one byte in the first overhead area.

**28.** The method according to claim 26, wherein multiple identical pieces of difference accumulation information are placed or filled in different rows of the first overhead area.

**29.** The method according to claim 26, wherein each row of the first overhead area is used to fill with or place a first portion of the difference accumulation information, and the first portion of the difference accumulation information is used to fill with or place the difference accumulation information of a current moment; and/or

each row of the first overhead area is used to fill with or place another portion of the difference accumulation information other than the first portion, and the other portion of the difference accumulation information is used to fill with or place difference accumulation information of a past moment.

**30.** The method according to claim 29, wherein each row of the first overhead area is used to fill with or place the first portion of the difference accumulation information, with the same column(s).

**31.** The method according to claim 26, wherein three identical pieces of difference accumulation information are placed or filled in an $i^{th}$ row of the first overhead area, an $(i+1)^{th}$ row of the first overhead area, and an $(i+2)^{th}$ row of the first overhead area, respectively; wherein i is 1 or 2; or

three identical pieces of difference accumulation information are placed or filled in a third row of the first overhead area, a fourth row of the first overhead area and a first row of a first overhead area of a next frame, respectively; or
three identical pieces of difference accumulation information are placed or filled in a fourth row of the first overhead area, a first row of a first overhead area of a next frame and a second row of the first overhead area of the next frame, respectively.

**32.** The method according to claim 26, further comprising:
performing, by the third device, a majority decision or a majority voting based on multiple identical pieces of difference accumulation information in the first overhead area to obtain a correct piece of difference accumulation information.

**33.** The method according to claim 26, wherein the first frame further comprises a second overhead area, the second overhead area is used to fill with or place a first check code determined based on the difference accumulation information;
the method further comprises: performing, by the third device, verification based on the first check code filled or placed in the second overhead area.

**34.** The method according to claim 26, wherein the difference accumulation information represents an accumulated difference of a specified parameter during a process in which a second frame is sent by the first device and arrives at a current device; and/or
the difference accumulation information comprises an accumulated phase difference and/or an accumulated frequency difference.

**35.** A transmission apparatus, comprising: a first processing unit, configured to map service data into a first frame, wherein the first frame comprises a first overhead area, the first overhead area is used to fill with or place difference accumulation information, and the first overhead area is capable of placing or filling multiple identical pieces of difference accumulation information.

**36.** A transmission apparatus, comprising: a second communication unit, configured to receive a second frame, wherein the second frame comprises a first frame, the first frame comprises a first overhead area, the first overhead area is used to fill with or place difference accumulation information, and the first overhead area is capable of placing or filling multiple identical pieces of difference accumulation information.

**37.** A transmission apparatus, comprising: a third communication unit and a third processing unit; wherein

the third communication unit is configured to receive a second frame sent by a second device;
the third processing unit is configured to demap or demultiplex the second frame into a first frame; wherein the first frame comprises a first overhead area, the first overhead area comprises placed or filled difference accumulation information, the first overhead area comprises multiple identical pieces of difference accumulation information; and the third processing unit is further configured to obtain clock information or frequency information of the first frame based on the difference accumulation information.

**38.** A computer-readable storage medium storing a computer program, wherein the program is used to be executed by a processor to implement the steps of the method according to any one of claims 1 to 9, or

the program is used to be executed by a processor to implement the steps of the method according to any one of claims 10 or 25, or
the program is used to be executed by a processor to implement the steps of the method according to any one of claims 26 or 34.

**39.** An optical communication device, comprising a memory, a processor, and a computer program stored in the memory and used to be executed by the processor, wherein the processor is configured to execute the program to implement the steps of the method according to any one of claims 1 to 9; or

the processor is configured to execute the program to implement the steps of the method according to any one of claims 10 to 25; or
the processor is configured to execute the program to implement the steps of the method according to any one of claims 26 to 34.

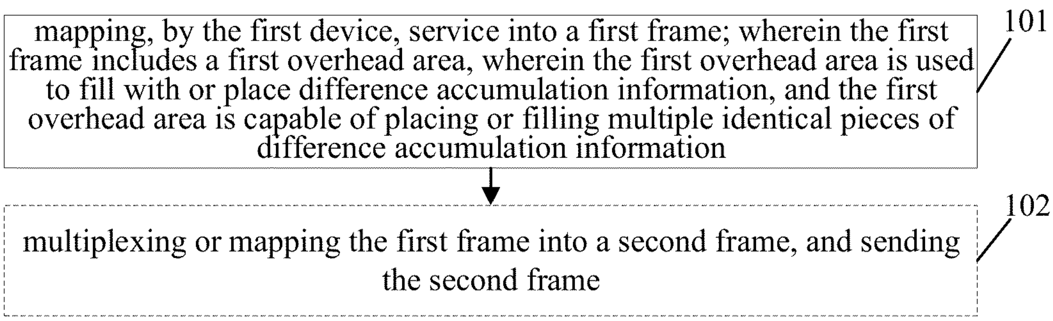
mapping, by the first device, service into a first frame; wherein the first frame includes a first overhead area, wherein the first overhead area is used to fill with or place difference accumulation information, and the first overhead area is capable of placing or filling multiple identical pieces of difference accumulation information
101
multiplexing or mapping the first frame into a second frame, and sending the second frame
102

FIG. 1

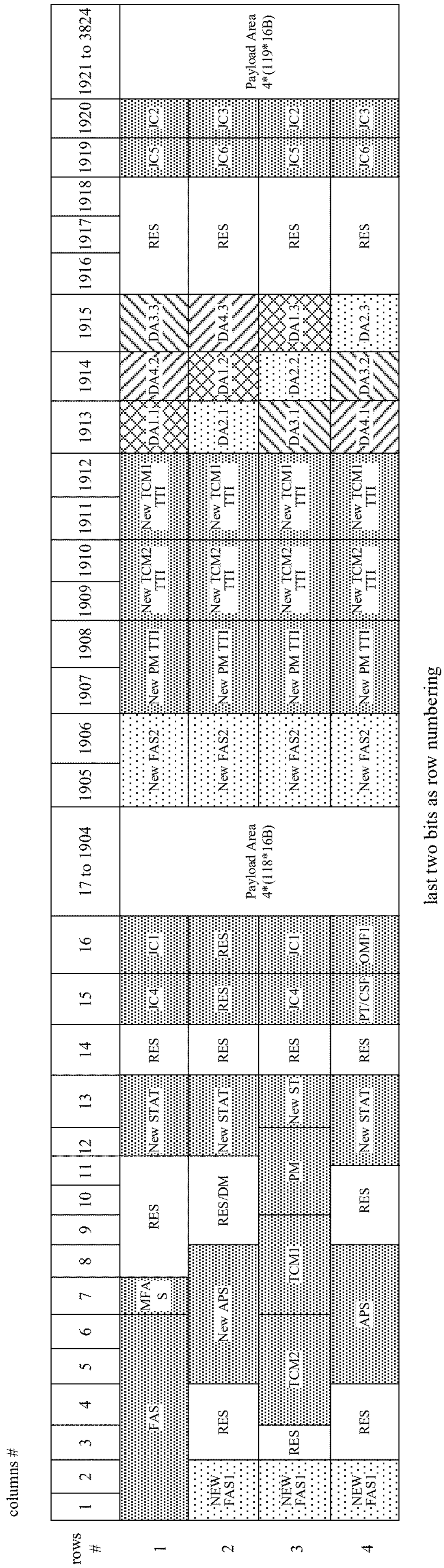
columns #
rows #
1
2
3
4
5
6
7
8
9
10
11
12
13
14
15
16
17 to 1904
1905
1906
1907
1908
1909
1910
1911
1912
1913
1914
1915
1916
1917
1918
1919
1920
1921 to 3824
FAS
MFAS
RES
New STAT
RES
JC4
JC1
NEW FAS1
RES
New APS
RES/DM
New STAT
RES
RES
RES
RES
TCM2
TCM1
PM
New ST
RES
JC4
JC1
APS
RES
New STAT
RES
PT/CSF
OMF1
Payload Area 4*(118*16B)
New FAS2
New PM TTI
New TCM2 TTI
New TCM1 TTI
DA1.1
DA4.2
DA3.3
DA2.1
DA1.2
DA4.3
DA3.1
DA2.2
DA1.3
DA4.1
DA3.2
DA2.3
JC5
JC2
JC6
JC3
Payload Area 4*(119*16B)
last two bits as row numbering

FIG. 2

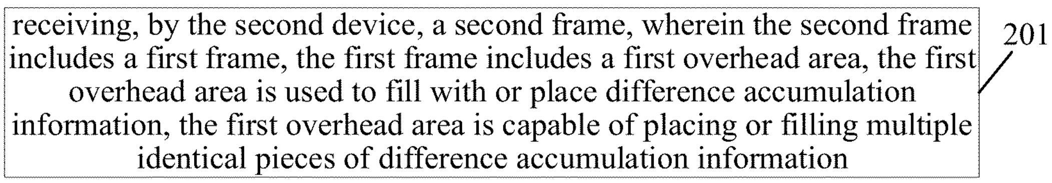
receiving, by the second device, a second frame, wherein the second frame includes a first frame, the first frame includes a first overhead area, the first overhead area is used to fill with or place difference accumulation information, the first overhead area is capable of placing or filling multiple identical pieces of difference accumulation information
201

**FIG. 3**

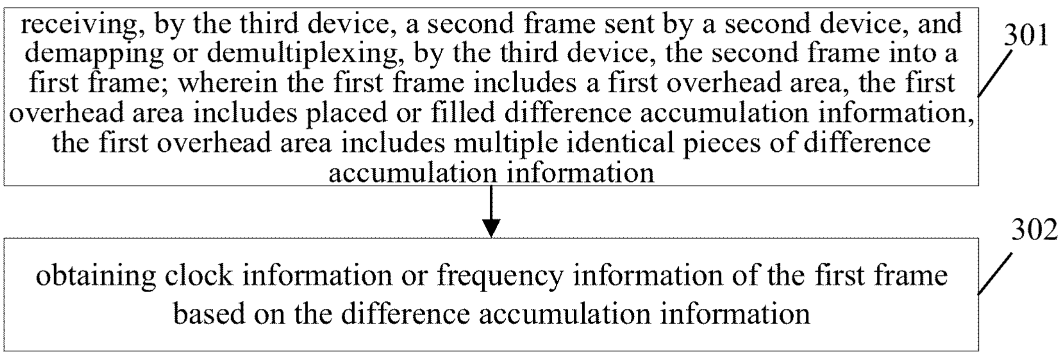
receiving, by the third device, a second frame sent by a second device, and demapping or demultiplexing, by the third device, the second frame into a first frame; wherein the first frame includes a first overhead area, the first overhead area includes placed or filled difference accumulation information, the first overhead area includes multiple identical pieces of difference accumulation information
301
obtaining clock information or frequency information of the first frame based on the difference accumulation information
302

**FIG. 4**

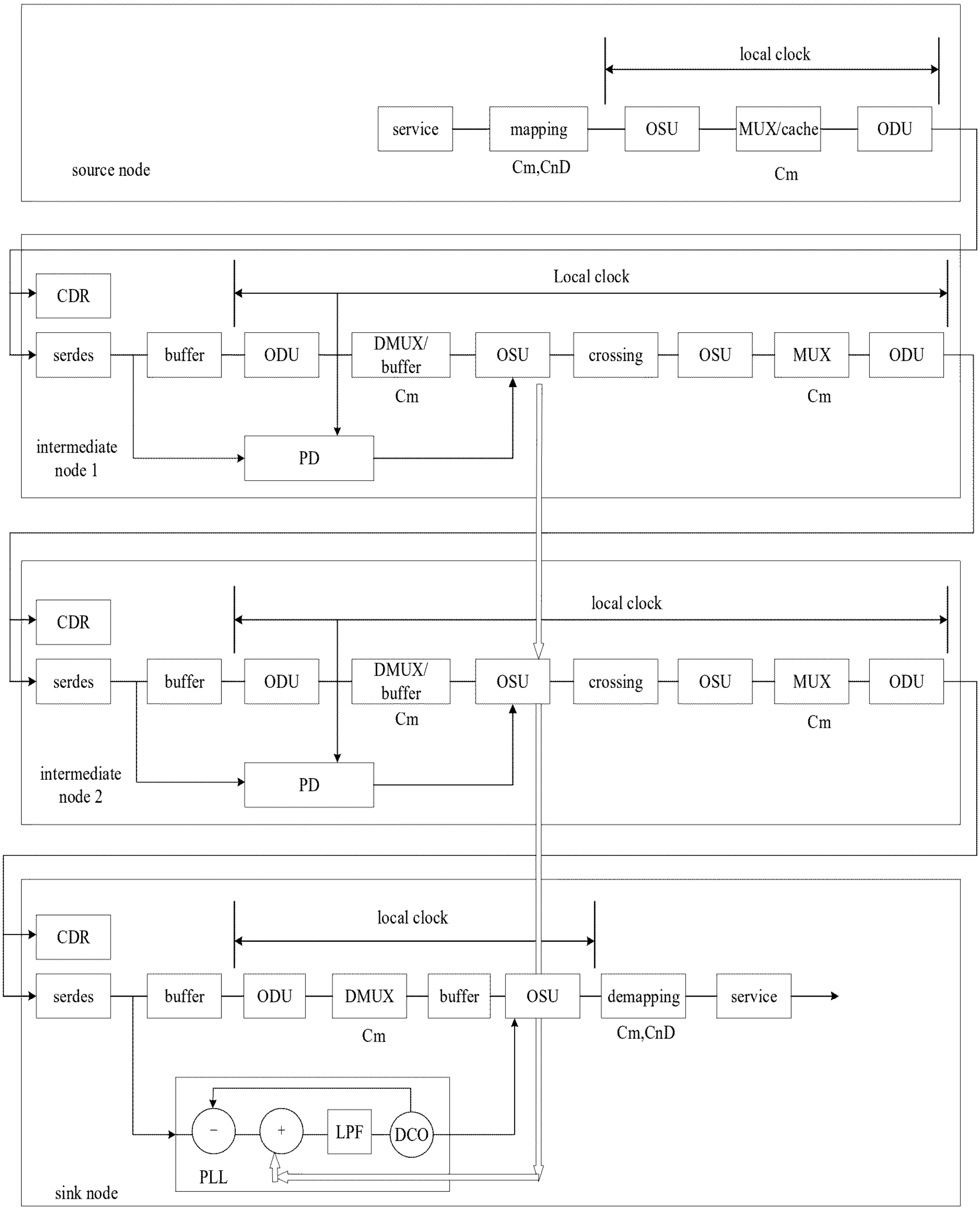

local clock
service
mapping
OSU
MUX/cache
ODU
source node
Cm,CnD
Cm
Local clock
CDR
serdes
buffer
ODU
DMUX/ buffer
OSU
crossing
OSU
MUX
ODU
Cm
Cm
intermediate node 1
PD
local clock
CDR
serdes
buffer
ODU
DMUX/ buffer
OSU
crossing
OSU
MUX
ODU
Cm
Cm
intermediate node 2
PD
local clock
CDR
serdes
buffer
ODU
DMUX
buffer
OSU
demapping
service
Cm
Cm,CnD
−
+
LPF
DCO
PLL
sink node


**FIG. 5**

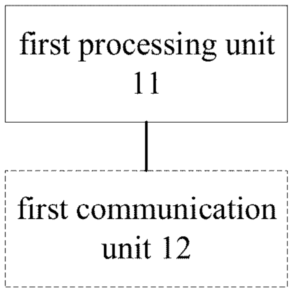


FIG. 6

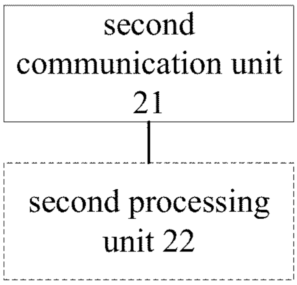


FIG. 7

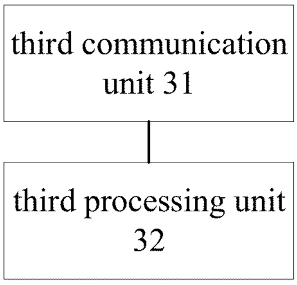


FIG. 8

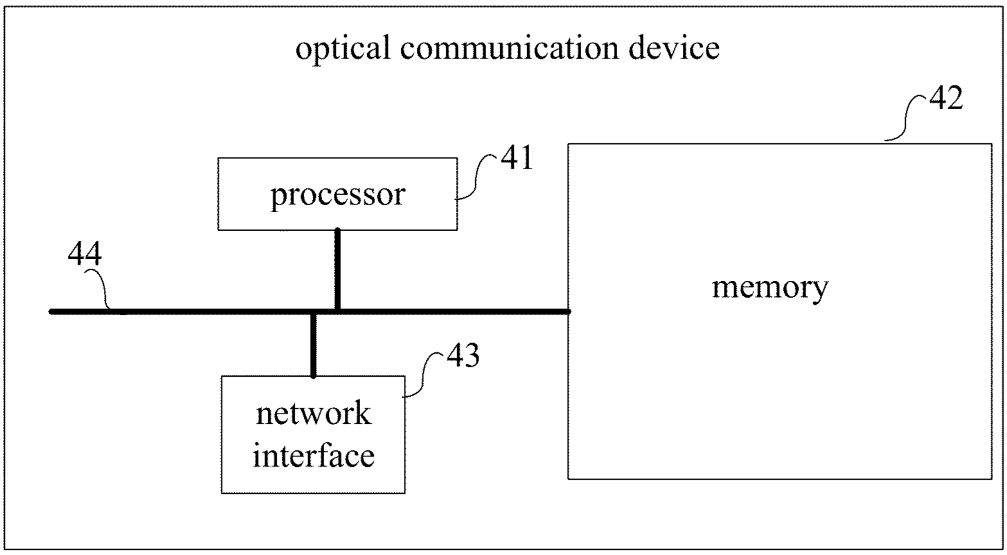


FIG. 9

## INTERNATIONAL SEARCH REPORT

International application No.
**PCT/CN2024/098984**

**A. CLASSIFICATION OF SUBJECT MATTER**

H04Q 11/00(2006.01)i

According to International Patent Classification (IPC) or to both national classification and IPC

**B. FIELDS SEARCHED**

Minimum documentation searched (classification system followed by classification symbols)

IPC: H04Q, H04J, G01S, H04L

Documentation searched other than minimum documentation to the extent that such documents are included in the fields searched

Electronic data base consulted during the international search (name of data base and, where practicable, search terms used)

CNTXT, VCN, ENTXT, DWPI, CNKI: 映射, 开销, 差分, 累计, 相位, 频率, 复用, map+, overhead, differential, accumulate +, phase, frequency, multiplex+

**C. DOCUMENTS CONSIDERED TO BE RELEVANT**

| Category* | Citation of document, with indication, where appropriate, of the relevant passages | Relevant to claim No. |
|---|---|---|
| A | CN 115134036 A (RESEARCH INSTITUTE OF CHINA MOBILE COMMUNICATIONS CORP. et al.) 30 September 2022 (2022-09-30)<br>description, paragraphs [0108]-[0276] | 1-39 |
| A | CN 101489157 A (HUAWEI TECHNOLOGIES CO., LTD.) 22 July 2009 (2009-07-22)<br>entire document | 1-39 |
| A | CN 110658498 A (CHINA AEROSPACE ACADEMY OF SYSTEMS SCIENCE AND ENGINEERING) 07 January 2020 (2020-01-07)<br>entire document | 1-39 |
| A | WO 2020034954 A1 (ZTE CORP.) 20 February 2020 (2020-02-20)<br>entire document | 1-39 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 September 2024** | **20 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2024/098984**

| Patent document cited in search report | Publication date (day/month/year) | Patent family member(s) | Publication date (day/month/year) |
|---|---|---|---|
| CN 115134036 A | 30 September 2022 | WO 2022199600 A1 | 29 September 2022 |
| CN 101489157 A | 22 July 2009 | US 2010209107 A1 | 19 August 2010 |
| CN 110658498 A | 07 January 2020 | None | |
| WO 2020034954 A1 | 20 February 2020 | CN 110830426 A | 21 February 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310729548